# EUROPÄISCHE PATENTSCHRIFT

(11) **EP 0 663 946 B1**
(45) Veröffentlichungstag und Bekanntmachung des Hinweises auf die Patenterteilung: **09.04.1997**
(21) Anmeldenummer: 93922511.6
(22) Anmeldetag: 04.10.1993
(51) Int. Cl.: C11D 11/00, C11D 11/02

(54) **WERTSTOFFE UND WERTSTOFFGEMISCHE FÜR NETZ-, WASCH- UND/ODER REINIGUNGSMITTEL IN NEUER ZUBEREITUNGSFORM**
VALUABLE SUBSTANCES AND MIXTURES OF VALUABLE SUBSTANCES FOR WETTING AGENTS, DETERGENTS AND/OR CLEANERS IN A NEW FORM OF PREPARATION
PRODUITS D'INTERET ET MELANGES DE PRODUITS D'INTERET POUR AGENTS MOUILLANTS, DETERGENTS ET/OU NETTOYANTS SOUS UNE NOUVELLE FORME DE PREPARATION

(30) Priorität: 12.10.1992 DE 4234376
(43) Veröffentlichungstag der Anmeldung: 26.07.1995
(73) Patentinhaber: Henkel Kommanditgesellschaft auf Aktien, 40191 Düsseldorf (DE)
(72) Erfinder: RÄHSE, Wilfried, D-40589 Düsseldorf (DE); FUES, Johann, Friedrich, D-41516 Grevenbroich (DE); PATTBERG, Herbert, D-40723 Hilden (DE); PAATZ, Kathleen, D-40593 Düsseldorf (DE)
(86) Internationale Anmeldenummer: EP9302703
(87) Internationale Veröffentlichungsnummer: WO9409109

(56) Entgegenhaltungen:
- WO-A-92/05849
- DE-A- 2 921 945
- US-A- 4 171 243

## Beschreibung

### Gebiet der Erfindung

Die Erfindung betrifft das Gebiet der Wertstoffe und Wertstoffgemische für den Einsatz in Netz-, Wasch- und/oder Reinigungsmitteln und beschreibt insbesondere eine neuartige Zubereitungsform dieser bekannten Stoffklasse bei ihrer Ausbildung als schütt- und/oder rieselfähiges kornförmiges Gut. Die erfindungsgemäße Lehre will dabei insbesondere Produkte der angegebenen Art zugänglich machen, die sich durch eine Kombination von wichtigen anwendungstechnischen Parametern des hier betroffenen Sachgebietes auszeichnen, die in der bis heute üblichen großtechnischen Herstellung solcher Wertstoffe nur schwer zu verwirklichen ist.

### Stand der Technik

Wertstoffe und Wertstoffgemische für den Einsatz in Netz-, Wasch- und/oder Reinigungsmitteln in Form eines schüttfähigen kornförmigen Gutes werden in aller Regel durch Trocknungsverfahren intermediär erhaltener wäßriger Zubereitungen dieser Stoffklasse gewonnen. Die Sprühtrocknung solcher Zubereitungen findet seit Jahrzehnten weltweit in großtechnischem Maßstab statt. Als Trocknungsgasstrom werden Heißluft beziehungsweise Gemische von Luft und heißen Verbrennungsgasen eingesetzt.

Die anwendungstechnischen Anforderungen an solche schütt- und rieselfähigen Pulver, Granulate oder auch stärker verdichteten kornförmigen Materialien sind extrem vielgestaltig und in vielfacher Beziehung in sich widerspruchsvoll. Lediglich beispielhaft gilt etwa: Die Wertstoffe beziehungsweise Wertstoffgemische sollen nach heutiger Vorstellung zu vergleichsweise hohen Schüttgewichten verdichtet, gleichzeitig aber im Wasch- beziehungsweise Reinigungsprozeß schnell wieder auflösbar sein. Die Mitverwendung sogenannter Stellmittel, denen keine wesentliche Funktion im Wasch- beziehungsweise Reinigungsprozeß zukommt, die aber den trockenen Zubereitungsformen erhöhte Schüttdichte und in gewissem Sinne auch eine verbesserte Wiederauflösbarkeit verleihen können, soll soweit wie möglich eingeschränkt oder am besten ganz außer Betracht gelassen werden. Der Gehalt der Feststoffzubereitungen an Komponenten mit Tensidcharakter soll soweit wie möglich nach oben angehoben werden, um der Konzeption des optimierten Wirkstoffkonzentrates zu entsprechen. Bekannt ist aber, daß diesen Tensiden - und zwar sowohl den anionischen wie den nicht-ionischen Tensiden - insbesondere bei der Auftrocknung aus wäßrigen Zubereitungen ausgesprochene Vergelungstendenz zukommt, die zu schwerwiegenden Behinderungen in der Wiederauflösbarkeit auch eines feinteiligen Gutes bis hin zur Unlöslichkeit führt. Wichtig ist weiterhin die bekannte Temperatursensitivität zahlreicher Wertstoffe des hier angesprochenen Gebietes, insbesondere in Gegenwart von Wasser. Die Herstellung trockener schütt- beziehungsweise rieselfähiger Wertstoffe und Wertstoffgemische des hier betroffenen Anwendungsgebietes - beispielsweise die großtechnische Herstellung von Textilwaschmitteln - ist dementsprechend heute zu einem Arbeitsgebiet weit entwickelter Hochtechnologie geworden.

Im Rahmen großtechnischer Trocknungsverfahren gewinnt in jüngster Zeit die an sich seit ca. 100 Jahren bekannte Technologie der Heißdampftrocknung zunehmende Beachtung. Die Kreislaufführung des als Trocknungsgas eingesetzten überhitzten Wasserdampfes im geschlossenen System sowie die Möglichkeit der unmittelbaren Kondensation des ausgekreisten Brüdenteilstromes schaffen gute Voraussetzungen für das Betreiben solcher Trocknungsanlagen mit geringen die Umwelt belastenden Emmissionen. Bis heute schränkt sich allerdings der praktische Einsatz dieser Technologie auf nicht-klebriges stückiges Naßgut ein. So wird beispielsweise der überhitzte Heißdampf bei der Braunkohlen- und Klärschlammtrocknung oder bei der Trocknung von Rübschnitzeln, Biomassen und anderen organischen Produkten für die Tierfutterverwertung eingesetzt, vergleiche hierzu beispielsweise D. Gehrmann "Entwicklungstendenzen der Trocknungstechnik in der chemischen Industrie", **Chem.-Ing. Tech. 62 (1990) A 512 - 520**, insbesondere die Unterkapitel 2.2 und 3.1.

Umfangreiche Arbeiten der Anmelderin beschäftigen sich mit der Einsatzmöglichkeit des Arbeitsprinzips der Heißdampftrocknung auf Wertstoffe und Wertstoffgemische aus dem Bereich der Netz-, Wasch- und/oder Reinigungsmittel. Es wurde überraschenderweise gefunden, daß dieses Trocknungsverfahren auch für das hier angesprochene und aus vielgestaltigen Überlegungen heraus sehr viel sensitivere Arbeits- beziehungsweise Produktgebiet die bisher bekannten, insbesondere ökologischen und energetischen Vorteile der Heißdampftrocknung genutzt werden können. So beschreibt die **DE-A 40 30 688** ein Verfahren zur Gewinnung feinteiliger fester schütt- beziehungsweise rieselfähiger Wertstoffe oder Wertstoffgemische für Netz-, Wasch- und/oder Reinigungsmittel aus ihren wäßrigen Zubereitungen, wobei überhitzter Wasserdampf als trocknender Heißgasstrom eingesetzt wird. Dabei wird die Trocknung des partikulären Gutes vor dessen Gefährdung durch thermische Einwirkung abgebrochen.

In einer Reihe weiterer älterer Anmeldungen der Anmelderin werden besondere Ausgestaltungen und Verbesserungen solcher Trocknungsverfahren mit überhitztem Wasserdampf als Heißgasstrom und deren Anwendung auf das Gebiet der Wertstoffe und Wertstoffgemische für Netz-, Wasch- und/oder Reinigungsmittel geschildert.

Die im nachfolgenden geschilderte technische Lehre betrifft eine wichtige Weiterentwicklung dieser Technologie der Herstellung von trockenen schütt- beziehungsweise rieselfähigen Wertstoffen oder Wertstoffgemischen aus dem Bereich der Netz-, Wasch- und/oder Reinigungsmittel. Die erfindungsgemäße Lehre baut dabei auf den Erkenntnissen und Arbeitsregeln aus der **DE-A 40 30 688** und den genannten älteren Anmeldungen auf. Zum Zwecke der Erfindungsoffenbarung wird dementsprechend hiermit ausdrücklich der Offenbarungsinhalt dieser Veröffentlichung und älteren Anmeldungen auch zum Gegenstand der vorliegenden Erfindungsoffenbarung gemacht, der in Kombination mit den nachfolgend angegebenen weiterführenden Erkenntnissen und Arbeitsregeln zu verstehen ist.

Die erfindungsgemäße Lehre geht von der überraschenden Erkenntnis aus, daß mit dem Einsatz des überhitzten Wasserdampfs als Trocknungsmedium bei der Auftrocknung wäßriger Zubereitungen von Wertstoffen und Wertstoffgemischen aus dem Bereich der Netz-, Wasch- und/oder Reinigungsmittel bisher nicht bekannte Kombinationen von wichtigen anwendungstechnischen Eigenschaften im Trockenprodukt eingestellt werden können. In weiterführender Ausgestaltung der Erfindung werden hierauf aufbauend neue Wertstoffzubereitungen zugänglich, die sich bisher bekannten Materialien als überlegen erweisen. Der Austausch der konventionellen Heißgasphase auf Basis von Brenngasen beziehungsweise Luft/Brenngasgemischen gegen den überhitzten Wasserdampf führt nicht nur zur verbesserten Ökologie des Gesamtverfahrens und der in bestimmter Weise abgewandelten chemisch-thermodynamischen Beanspruchung des zu trocknenden Gutes, ersichtlich wird auch die primär im Mikrobereich entstehende Raumstruktur des Trockengutes durch die Auswahl des überhitzten Wasserdampfs als Trocknungsmedium beeinflußt. Die erfindungsgemäße Lehre macht davon Gebrauch und ermöglicht auf diesem Wege die Bereitstellung von Wertstoffen beziehungsweise Wertstoffgemischen der geschilderten Art mit neuartigen Eigenschaften und/oder neuartiger Zusammensetzung.

### Beschreibung der Erfindung

Gegenstand der Erfindung sind dementsprechend in einer ersten Ausführungsform Wertstoffe und Wertstoffgemische für den Einsatz in Netz-, Wasch- und/oder Reinigungsmitteln in Form eines schüttfähigen kornförmigen Gutes, das durch Beladen eines im unbeladenen Zustand eine poröse Grundstruktur aufweisenden Grundkorns (Trägerbead) mit einer Wertstoffe der angegebenen Art enthaltenden Zubereitung (Auftragsmasse) gewonnen wird. Das Kennzeichen der Erfindung liegt hier darin, daß das Trägerbead ein durch Sprüh- und/oder Wirbelschichttrocknung in überhitztem Wasserdampf gewonnenes Material ist, das im Temperaturbereich von 100 bis 110 °C als Feststoff vorliegt, dessen Plastizität und Oberflächenklebrigkeit derart eingeschränkt sind, daß substantielle Verklebungen der Teilchen miteinander und/oder Verklebungen deren offenporigen Innenstruktur auch unter den Bedingungen der Einwirkung des überhitzten Wasserdampfs ausscheiden.

Dabei ist in den wichtigen Ausführungsformen der Erfindung die Auftragsmasse zu einem wenigstens substantiellen Anteil in die poröse Innenstruktur des Trägerbeads eingetragen und erfüllt das zugängliche Freiraumvolumen dieser Innenstruktur zu wenigstens 10 Vol.-%, bevorzugt zu wenigstens 50 Vol.-%. Es kann dabei - insbesondere in Abhängigung von der physikalischen Beschaffenheit der Auftragsmasse - zweckmäßig sein, daß nur begrenzte oder keine substantiellen Mengen der Auftragsmasse im Korn-Außenbereich vorliegen.

In einer wichtigen Ausführungsform enthält nicht nur die in das Trägerbead eingetragene Auftragsmasse Wertstoffe der angegebenen Art, es ist bevorzugt, daß auch das Trägerbead wenigstens anteilsweise, vorzugsweise wenigstens überwiegend aus Wertstoffen für Netz-, Wasch- und/oder Reinigungsmittel gebildet ist und in der angegebenen Weise durch Trocknung einer fließfähigen insbesondere wäßrigen Zubereitung in überhitztem Wasserdampf hergestellt worden ist. Als ein wichtiger Wertstoffbestandteil können dabei schon bei dem Aufbau beziehungsweise der Herstellung des Trägerbeads entsprechende Wirkstoffe mit Tensidcharakter zum Einsatz kommen. Durch die nachfolgend geschilderten speziellen Elemente der Erfindung gelingt es auch und gerade unter Einsatz dieser zur Verklebung und Vergelung neigenden und dann üblicherweise schwer wasserlöslichen beziehungsweise schwer wasseremulgierbaren Verbindungen hochporöse und dementsprechend aufnahmebereite Trägerbeads zu schaffen, die zur Beladung der Trägerbead-Innenstruktur mit weiteren Wertstoffen des betroffenen Sachgebietes geeignet sind und sich gleichzeitig durch eine optimierte Auflösbarkeit beziehungsweise Emulgierbarkeit in den üblicherweise wäßrigen Phasen beim praktischen Einsatz auszeichnen.

Ein weiterer Gegenstand der Erfindung sind dementsprechend die porösen Trägerbead als solche für die Herstellung von festen Netz-, Wasch- und/oder Reinigungsmitteln mit verbesserter Wasserlöslichkeit, die insbesondere als Träger für die Aufnahme von Wert- und/oder Hilfsstoffen des angegebenen Anwendungsgebietes geeignet sind und durch Heißgastrocknung einer fließfähigen, insbesondere wäßrigen Zubereitung des Trägerbead-Materials gewonnen werden, wobei die Erfindung als Kennzeichnen vorsieht, daß dieses Trägerbead eine saugfähig poröse Innenstruktur aufweist, durch Sprüh- und/oder Wirbelschichttrocknung in überhitztem Wasserdampf hergestellt worden ist, und im Temperaturbereich von 100 bis 110 °C bevorzugt im Temperaturbereich bis 120°C, als Feststoff vorliegt, dessen Plastizität und Oberflächenklebrigkeit derart eingeschränkt sind, daß substantielle Verklebungen der Teilchen miteinander und/oder deren offenporigen Innenstruktur auch unter den Bedingungen der Einwirkung des überhitzten Wasserdampfs ausscheiden.

Die Erfindung betrifft in weiteren Ausführungsformen das Verfahren zur Herstellung des kornförmigen, in einem wenigstens zweistufigen Verfahren gewonnenen Gutes sowie die Verwendung der porösen Trägerbeads und/oder des mit Wertstoffen beladenen kornförmigen Gutes als Bestandteil von Netz-, Wasch- und/oder Reinigungsmitteln in fester Anbietungsform.

Bei der Gewinnung von festen Anbietungsformen für Wertstoffe und Wertstoffgemische des betroffenen Sachgebietes ist die Maßnahme der Beladung eines in erster Stufe gebildeten hinreichend aufnahmefähigen Trägerbeads mit fließfähigen Wertstoffen oder einer Wertstoffzubereitung in fließfähiger Form eine der wohl bekanntesten Maßnahmen. So werden bei Raumtemperatur flüssige Niotensidverbindungen und/oder andere flüssige Wertstoffe beispielsweise in ein vorgebildetes pulverförmiges oder körniges Material aus Inhalts- und Hilfsstoffen des hier betroffenen Sachgebietes eingetragen. Werden dabei Hilfsflüssigkeiten, beispielsweise Wasser, mitverwendet, so kann sich eine nachfolgende Trocknungsstufe anschließen.

Die in der Praxis wohl wichtigsten Ausführungsformen für die Ausbildung solcher Trägerbeads ist einerseits die Herstellung und verwendung sogenannter Turmpulver, die überwiegend aus wasserlöslichen und/oder wasserunlöslichen, anorganischen und/oder organischen Bestandteilen und Zusatzstoffen - etwa eines Textilwaschmittels - bestehen. In diese Turmpulver können dann flüssige Komponenten wie Niotenside, Parfümöle und dergleichen eingetragen werden. Bestandteil der Turmpulver sind in aller Regel auch waschaktive Aniontenside, insbesondere entsprechende bei Raumtemperatur feste Salze. Solche tensidischen Komponenten sind allerdings nach bisheriger Praxis nur in beschränkten Mengen Bestandteil der Feststoff-Vorkomponente. Grund dafür ist die ausgesprochene Vergelungstendenz der bei Raumtemperatur festen Tensidverbindungen im Rahmen des üblichen Auftrocknungsprozesses unter Einwirkung von Heißgasen und dem aus dem Einsatzgut auszutragenden Wasserdampf. Die sich ausbildenden vergelten Tensidpartikel beziehungsweise -schichten sind in aller Regel schwer wasserlöslich. Die Beschränkung des mengenmäßigen Anteiles fester Tensidverbindungen bei der Turmpulverherstellung wird u.a. von der Überlegung mitbestimmt, eine hinreichende Spreitung und Durchsetzung der aufgetrockneten Tensidfeststoffe mit anorganischen und/oder organischen Mischungsbestandteilen mit verbesserter Wasserlöslichkeit oder -dispergierbarkeit sicherzustellen.

Eine besondere Ausführungsform des Arbeitens mit Trägerbeads zur Herstellung fester Anbietungsformen von Wertstoffen des hier betroffenen Bereiches, die insbesondere tensidische Feststoffe enthalten, ist daher das Arbeiten mit besonders feinteiligen insbesondere anorganischen wasserunlöslichen **Trägerbestandteilen**, die zur Dispergierung in wäßriger Lösung geeignet sind. Unter Mitverwendung beschränkter Mengen an Bindemitteln, die tensidischer Natur sein können, werden Trägerbeads geschaffen, die mit weiteren Wertstoffen beaufschlagt werden können. Die feinteiligen unlöslichen Grundstoffe sind insbesondere ihrerseits Wertstoffe für das angesprochene Sachgebiet. Hier kommt entsprechenden Mineralstoffen mit Ionenaustauschvermögen besondere Bedeutung zu. Im Rahmen von Wasch- und Reinigungsmitteln sind wichtige Vertreter die Zeolithe, wobei dem Zeolith-NaA in Waschmittelqualität aber auch anderen feinteiligen kristallinen und gegebenenfalls quellfähigen Schichtsilikaten natürlichen und/oder synthetischen Ursprungs besondere Bedeutung zukommt. Trägerbeads auf Basis solcher Materialien können mit gegebenenfalls erhöhten Mengen an tensidischen Verbindungen beladen werden, gleichwohl liegt auch hier im Fertigprodukt der Tensidanteil an nichtionischen und/oder anionischen Tensidverbindungen in einem vergleichsweise niedrigen Bereich, beispielsweise bis maximal etwa 35 Gew.-% bezogen auf beladenes Trägerbead. Beispielhaft sei verwiesen auf die Angaben der **EP-B1 0 149 264** oder **EP-A1 0 021 267**.

Charakteristisch für solche beladenen Trägerbeads des Standes der Technik ist in der Regel, daß der eingetragene Wertstoffanteil überwiegend oder vollständig im Außenbereich des Trägerkornes - d.h. auf dessen Oberfläche - abgelagert ist. Hinreichend fest zusammenhaltende poröse Granulate von feinteiligen unlöslichen Feststoffpartikeln können in diesem Sinne nach den bisher bekannten Arbeitsmethoden besonders geeignete Trägerbeadmaterialien sein. Sie schaffen über die Granulierung der unlöslichen Feinpartikel ein Trägermaterial doch immerhin vergrößerter Oberfläche, die einer Belegung mit der flüssigen und/oder in fließfähiger Form aufgebrachten Beladungsmasse zugänglich ist.

Für nicht möglich wird bisher angesehen, bei Raumtemperatur feste Wertstoffgemische der betroffenen Art als Trägerbead für die Aufnahme weiterer Wertstoffe des Wasch- und Reinigungsgebietes zum Einsatz zu bringen, die zum substantiellen Anteil, beispielsweise zu deutlich mehr als 1/3 des Gesamt-Trägerbeads oder gar zur überwiegenden Menge dieses Träger-beads aus tensidischen Wertstoffen gebildet wird. Grundlage ist hier das Wissen um die Schwerlöslichkeit und die Vergelungstendenz solcher hochkonzentrierten, bei Raumtemperatur festen Tensidgemische bei ihrem Eintrag in wäßrige Phasen. Die erfindungsgemäße Lehre baut auf der überraschenden Erkenntnis auf, daß trockene Wertstoffgemische der erfindungsgemäßen Art, gewonnen durch Trocknung in überhitztem Wasserdampf, sich deutlich anders verhalten als die gleichen Wertstoffgemische aus der konventionellen Heißgastrocknung.

Diese Erkenntnis steht im Widerspruch zum bisherigen, der erfindungsgemäßen Lehre am nächsten kommenden Wissen der Fachwelt. Die eingangs zitierte **DE-A 40 30 688** bezieht sich in Spalte 2, 28 bis 30, auf die Literaturstelle A.M. Trommelen et al "Evaporation und Drying of Drops in Superheated Vapors" **AIChE Journal 18 (1970), 857 bis 887**. Die Verfasser dieser zuletzt genannten Veröffentlichung untersuchen am isolierten einzelnen Tropfen dessen Verhalten einmal in Heißluft zum anderen in überhitztem Wasserdampf. Es werden dabei Naßmaterialien unterschiedlichsten Ursprungs eingesetzt. Neben reinem Wasser werden verschiedenartigste wäßrige Aufbereitungen aus dem Lebensmittelsektor, Lösungen und Suspensionen rein anorganischer Materialien sowie schließlich Tropfen einer wäßrigen Lösung eines handelsüblichen Textilwaschmittels eingesetzt. Die Verfasser dieser Arbeit untersuchen und beschreiben dabei insbesondere auch gerade die Strukturänderungen, die das Material im Prozeß der Auftrocknung durchmacht und vergleichen die Produktbeschaffenheit der aufgetrockneten Tropfen einerseits in Heißlufttrocknung, andererseits in überhitztem Wasserdampf. Für den dampfgetrockneten Tropfen der wäßrigen Waschmittelzubereitung wird bei der Gasphasentemperatur von 250°C eine beträchtlich höhere Dichte des Trockenproduktes festgestellt. Insgesamt führen die Verfasser als zusammenfassenden Abschluß (a.a.O. Seite 866) aus:
*"No radically different properties of the dried particles result from drying in steam as compared with air. However, drops dried in steam sometimes yield denser particles. Dehydration and thermal degradation occur just as readily in both drying media."*

Die erfindungsgemäße Lehre baut demgegenüber auf der überraschenden Erkenntnis auf, daß Wirkstoffe und Wirkstoffgemische des Netz-, Wasch- und/oder Reinigungsmittelgebietes und dabei insbesondere tensidische Wirkstoffe enthaltende Stoffmischungen dieser Art zu völlig unterschiedlichen Ergebnissen einmal bei der Trocknung in überhitztem Wasserdampf und zum anderen bei der Trocknung in konventionellen Heißgasen führen. Im zuletzt genannten Fall bildet sich im Tropfen von der Oberfläche nach innen schnell ein Temperatur- und Feuchtigkeitsgradient aus. Die Oberfläche des Tropfens trocknet schnell, es entsteht eine feste Kruste. Aus dem Inneren des Tropfens diffundiert Flüssigkeit nach außen, wobei im Wasser gelöste Stoffe auskristallisieren, sobald deren Löslichkeit überschritten wird. Das Ergebnis ist eine weitere Verfestigung und Verdickung der äußeren Hülle.

Die Trocknung eines Tropfens im überhitzten Wasserdampf läuft dagegen anders ab. Beim Kontakt des noch nicht auf Siedetemperatur aufgeheizten Tropfens mit überhitztem Dampf kondensiert zunächst Wasser auf der Oberfläche. Es bildet sich ein Wasserfilm um den Tropfen. Die Kondensationswärme geht auf das Tropfeninnere über. Ist die Verdampfungstemperatur im Tropfen erreicht, so erfolgt in dem Einstoffsystem Wasser/Wasserdampf die Trocknung gemäß der Dampfdruckkurve im gesamten Tropfen, d.h. das Wasser beginnt im gesamten Tropfen zu verdampfen. Es wird also nicht wie bei der Trocknung mit Heißgasen bereits zu Beginn eine starre Außenhülle gebildet, die das weitere Schrumpfen des Tropfens verhindert. Der Tropfen trocknet über den Querschnitt gleichmaßig ein, wobei sich bei Einsatz der erfindungsgemäß definierten Wertstoffe und Wertstoffgemische in dem entstehenden Feststoffgefüge offenbar durchgängig viele kleine Dampfkanäle bilden. Die gebildete Trockenstoffmasse wird damit extrem porös. Hiervon macht die erfindungsgemäße Lehre Gebrauch. Die hohe Porosität des Feststoffmaterials kann die Grundlage für eine substantiell verbesserte Wasserlöslichkeit und/oder für ein stark erhöhtes Saugvermögen des heißdampfgetrockneten Materials gegenüber fließfähigen Phasen im Vergleich zum konventionell getrockneten Material sein. Erfindungsgemäß wird damit nicht nur die äußere Teilchenoberfläche des kornförmigen Trägerbeads der Belegung mit der Auftragsmasse zugänglich, insbesondere die innere Oberfläche und letztlich damit der ganze frei zugängliche Innenraum des im überhitzten Wasserdampf getrockneten Trägerbeadkorns kann mit der Auftragsmasse belegt beziehungsweise ausgefüllt werden.

Die zuvor geschilderte erste Ausführungsform der erfindungsgemäßen Lehre macht insbesondere von diesem erhöhtem Saugbeziehungsweise Aufnahmevermögen der Trockenstoffe Gebrauch, die beim Einsatz von überhitztem Wasserdampf als Trocknungsmedium gewonnen worden sind. Hier wird ein durch Sprüh- und/oder Wirbelschichttrocknung in überhitztem Wasserdampf gewonnenes Material als Trägerbead eingesetzt, das in einer zweiten Verfahrensstufe mit Wertstoffen oder Wertstoffgemischen aus dem Bereich der Netz-, Wasch- und/oder Reinigungsmittel beladen wird. Diese Beladung in der zweiten Stufe, auf die im Zusammenhang mit der Schilderung des erfindungsgemäßen Verfahrens zur Herstellung der beladenen Trägerbeads näher eingegangen wird, erfolgt in aller Regel unter Bedingungen, unter denen die einzuführende Masse in fließfähigem Zustand vorliegt. Als Beladung kommen also insbesondere bei Raum- und/oder Arbeitstemperatur flüssige Wertstoffe und/oder Lösungen, Emulsionen und/oder Dispersionen von Wertstoffen in Betracht, wobei im zuletzt genannten Fall sich eine Abreicherung der zur Beladung eingesetzten Hilfsflüssigkeit - insbesondere Wasser - anschließen kann. Das technische Handeln im Sinne der erfindungsgemäßen Lehre ist allerdings nicht darauf beschränkt. Die Beladung des Trägerbeads kann auch mit Schmelzen der als Auftragsmasse einzuführenden Komponenten vorgenommen werden. Durch geeignete, dem Fachmann an sich bekannte Maßnahmen kann sichergestellt werden, daß das Einziehen der Auftragsmasse in den porösen Innenraum des Trägerbeads in gewünschtem Ausmaß möglich wird.

In einer wichtigen Ausführungsform sind nicht nur die als Auftragsmasse einzusetzenden Wertstoffe beziehungsweise Wertstoffgemische entsprechende Komponenten aus dem Bereich der Netz-, Wasch- und/oder Reinigungsmittel. Hier ist auch das Trägerbead selber wenigstens anteilsweise und dabei vorzugsweise wenigstens überwiegend aus Wertstoffen für Netz-, Wasch- und/oder Reinigungsmittel gebildet, die durch Trocknung einer fließfähigen, insbesondere wäßrigen Zubereitung in überhitztem Wasserdampf in das Trockenmaterial überführt worden ist. Dabei gilt dann die erfindungsgemäße Regel, daß das getrocknete Trägerbead im Temperaturbereich von 100 bis 110°C und bevorzugt im Temperaturbereich bis 120°C als Feststoff vorliegt, dessen Plastizität und Oberflächenklebrigkeit durch geeignete Auswahl und Zusammenstellung der das Trägerbead bildenden Komponenten derart eingeschränkt sind, daß substantielle Verklebungen der Teilchen miteinander und/oder substantielle Verklebungen deren offenporigen Innenstruktur auch unter den Bedingungen der Einwirkung des überhitzten Wasserdampfes ausscheiden. Die erfindungsgemäße Lehre stellt damit sicher, daß das spezielle hochporöse Strukturgerüst des primär bei der Trocknung mit überhitztem Wasserdampf anfallenden Trocknungsgutes derart fixiert ist, daß es in den unausweichlichen mechanischen Druck- und Berührungsbelastungen für ein solches kornförmiges Gut auch im Bereich erhöhter Temperaturen und gegebenenfalls in Gegenwart von Heißdampf aufrechterhalten bleibt.

Die in dieser Form stabilisierte poröse Innenstruktur, die sich als primäres Trocknungsergebnis der Herstellung des Trägerbeads durch Trocknung in überhitztem Wasserdampf ausbildet, wird zu einem wichtigen bestimmenden Element des erfindungsgemäßen Handelns in seinen verschiedenen Aspekten. Diese poröse Innenstruktur wird zur Beladung des zugänglichen Innenvolumens mit wenigstens substantiellen Anteilen der Auftragsmasse benutzt, durch - im nachfolgenden noch geschilderte - bestimmte Ausgestaltung der Auftragsmasse kann das Auflöseverhalten des beladenen Trägerbeads im praktischen Einsatz in wäßrigen Flotten entscheidend beeinflußt werden. Es ist dabei möglich, die Auftragsmasse nahezu oder tatsächlich vollständig in den Innenraum des jeweiligen kornförmigen Trägerbeads aufzunehmen, so daß auf seiner Außenfläche praktisch keine oder nur untergeordnete Restbestände der Auftragsmasse zurückbleiben. Ebenso kann aber auch gezielt eine partielle oder vollständige Beladung des porösen Innenraumes mit ausgewählten Komponenten als Auftragsmasse vorgenommen werden und zusätzlich weitere Anteile der gleichen oder einer anderen Auftragsmasse zur Beschichtung der Trägerbead-Außenflächen zum Einsatz kommen. Die erfindungsgemäße Lehre schafft damit Freiheitsgrade zum technischen Handeln, wie sie bisher auf dem hier betroffenen Sachgebiet nicht zur Verfügung stehen.

### Trägerbeads

In einer besonders wichtigen Ausgestaltung der erfindungsgemäßen Lehre sind die **Trägerbeads** als solche unter Mitverwendung beträchtlicher Mengen von Wertstoffen mit Tensidcharakter aufgebaut. Dabei kann der Gehalt des Trägerbeads an solchen Tensiden beispielsweise wenigstens etwa 10 Gew.-%, aber auch wesentlich mehr, beispielsweise wenigstens etwa 20 bis 30 Gew.-%, ausmachen. In wichtigen Ausführungsformen beträgt der Tensidgehalt des noch nicht beladenen Trägerbeads wenigstens etwa 35 Gew.-%, wobei in besonders wichtigen Ausführungsformen dieser Ausgestaltung der Tensidgehalt des unbeladenen Trägerbeads bei wenigstens etwa 50 Gew.-% liegt und dabei bis zu 90 bis 95 Gew.-% des Trägerbeads betragen kann. Es werden im nachfolgenden noch Sonderfälle geschildert werden, in denen durch Auswahl des richtigen Tensids das Trägerbead praktisch vollständig aus der tensidischen Komponente gebildet sein kann.

Je höher der Gehalt des Trägerbeads an tensidischer Komponente wird, um so stärker treten die individuellen Eigenschaften des eingesetzten Tensids im Verhalten des porösen Trägerbeads in den Vordergrund. Für die erfindungsgemäße Lehre bedeutet das, daß im Temperaturbereich von etwa 100 bis 120°C hinreichend feste Tensidkomponenten bevorzugte Materalien sind. In Betracht kommen hier insbesondere Aniontenside. Die Gewinnung von Aniontensidkonzentraten durch Sprühund/oder Wirbelschichttrocknung in überhitztem Wasserdampf ist bekanntlich Gegenstand der für die europäische ältere Anmeldung EP-A-0 625 921 [Veröffentlichungsdatem : 30.11.94] die Priorität darstellenden deutschen Patentanmeldung **DE-P 42 06 050.8** [Prioritätsdatum: 27.02.92]. Diese Aniontensidkonzentrate enthalten in erfindungsgemäß bevorzugten Ausführungsformen Abmischungen mit wasserlöslichen und/oder feinteiligen wasserunlöslichen anorganischen und/oder organischen Hilfs- und/oder Wertstoffen, deren Auswahl so getroffen wird, daß die erfindungsgemäß wesentlichen Einschränkungen der Plastizität und/oder der Oberflächenklebrigkeit im Temperaturbereich um 100 bis 120°C gewährleistet sind. Dabei liegen in den bevorzugten Ausführungsformen der Erfindung solche Mischungskomponenten, bezogen auf die Aniontenside im Trägerbead, in untergeordneten Mengen vor. Erfindungsgemäß gelingt damit erstmalig der Zugang zu festen trockenen Wertstoffzubereitungen des Gebietes der Netz-, Wasch- und Reinigungsmittel, in denen ein festes Trägerbead zum wenigstens überwiegenden Bestandteil auf Basis tensidischer Komponenten und insbesondere auf Aniontensidbasis aufgebaut ist. Die bisherige Waschmitteltechnologie kennt solche Stoffzubereitungen nicht.

Das Temperaturverhalten der das Trägerbead bildenden Komponenten und insbesondere der in der erfindungsgemäß bevorzugten Ausführungsform hier eingesetzten tensidischen Komponenten im Temperaturbereich von etwa 100 bis 120°C hat bestimmenden Einfluß auf die jeweils zu wählende Zusammensetzung der Wert- und Hilfsstoffe für den TrägerbeadAufbau. Wichtige Aniontenside, beispielsweise Fettalkoholsulfate (FAS) langkettiger Fettalkohole, eine Vielzahl waschaktiver Sulfonate, aber auch niotensidische Verbindungen, beispielsweise Alkylglycosidverbindungen langkettiger Fettalkohole, sind im angesprochenen Temperaturbereich zwar noch in der Feststoffphase beständig, ihre Plastizität und insbesondere Oberflächenklebrigkeit kann aber schon vergleichsweise stark zugenommen haben. Die Erfindung sieht für Einsatzmaterialien dieser Art vor, die thermisch nicht voll befriedigenden Bestandteile für das Trägerbead dadurch vollwertig einsetzbar zu machen, daß Mischungskomponenten mitverwendet werden, die die geforderte Temperaturstabilität und insbesondere die geforderten niedrigen Werte in Oberflächenklebrigkeit und Plastizität sicherstellen. Bei diesen Mischungskomponenten kann es sich um Wertstoffe im Sinne von heute üblichen Wasch- und Reinigungsmittelgemischen handeln, es können aber auch Hilfsstoffe mitverwendet werden, die im beabsichtigten Anwendungsgebiet keine Eigenfunktion entwickeln, die Verwendung der erfindungsgemäß zubereiteten Wertstoffe beziehungsweise Wertstoffkombinationen aber nicht stören. Solche Hilfsstoffe können wasserlöslich und/oder wasserunlöslich sein. Sie können dabei anorganischer und/oder organischer Natur sein. Im Falle der wasserunlöslichen Verbindungen werden üblicherweise feinteilige anorganische und/oder organische Hilfsstoffe mitverwendet. Lediglich beispielhaft sind die nachfolgenden Angaben zu verstehen:

### Anorganische/organische Hilfsstoffe

Geeignete wasserlösliche **anorganische Hilfsstoffe** zur Herabsetzung der Oberflächenklebrigkeit und Plastizität organischer Komponenten sind Salze wie Phosphate, insbesondere STP, Natriumsulfat oder Natriumcarbonat. Aber auch löslichen Natriumsilicaten von der Art der Wassergläser und/oder Alkalihydroxid kann entsprechende Funktion zukommen. Unlösliche anorganische Mischungskomponenten zur Stabiiisierung der Trägerbead-Konsistenz und Absenkung der Oberflächenklebrigkeit sind beispielsweise Builder-Komponenten auf Zeolith- Basis, insbesondere Zeolith-NaA in Waschmittelqualität, andere quellfähige oder nicht-quellfähige Schichtsilikate, beispielsweise entsprechende Montmorillonite wie Bentonit und dergleichen. Aber auch andere Builderkomponenten auf Basis fester, insbesondere kristalliner Silicat-Verbindungen, die in der heutigen Waschmitteltechnologie bekannt sind, kommen hier in Betracht. Einzelheiten dazu werden nachfolgend noch angegeben.

Entsprechende Hilfsmittel finden sich auf der Seite **organischer Komponenten**. So sind beispielsweise Salze niedermolekularer organischer Komponenten im hinreichend aufgetrockneten Zustand in der Regel auch bei erhöhten Temperaturen nicht-klebrige Komponenten. In Betracht kommen hier entsprechende organische Gerüstsubstanzen wie die Alkalisalze von Polycarbonsäuren beispielsweise Citronensäure, Adipinsäure, Bernsteinsäure, Nitrilotriessigsäure und dergleichen. Als Hilfsstoff zur Stabilisierung des Trägerbeads auch im hohen Temperaturbereich kommen aber auch organische Polymersubstanzen in Betracht wie sie in Wasch- und Reinigungsmitteln üblich sind, beispielsweise entsprechende Komponenten auf Basis von Cellulosederivaten und/oder PVP, oder aber auch inerte organische Polymermaterialien wie Cellulosepulver und dergleichen.

Grundsätzlich gilt, daß geeignete Stoffgemische und Mischungsverhältnisse mittels einer dem Fachmann geläufigen Arbeitsmethodik im Rahmen von Vorversuchen ermittelt werden können. Nach Durchführung entsprechender Vorversuche können dann die ausgewählten Stoffgemische der Sprühtrocknung aus wäßrigen Aufbereitungen in überhitztem Wasserdampf unterworfen werden. Das dabei anfallende kornförmige Trockengut zeigt in der nachfolgenden Behandlung mit einer fließfähigen Phase, ob und in welchem Ausmaß die erwünschte feinporöse Struktur und damit Beladbarkeit des gebildeten Trägerbeads auch in seiner Innenstruktur ausgebildet sind.

Wesentlich ist für das Verständnis der erfindungsgemäßen Lehre, daß übliche Aniontenside synthetischen und/oder natürlichen Ursprungs, wie sie in der Praxis der heutigen Netz-, Wasch- und Reinigungsmittel bekannt sind, durch Mitverwendung in der Regel beschränkter Mengen an Hilfsmitteln in den Zustand hinreichend temperaturstabiler und nichtklebriger Feststoffe umgewandelt und damit zum porösen Trägerbead mit aufgeschlossener Innenstruktur aufgearbeitet werden können. Auf diesem Wege erschließt sich damit erstmalig die Möglichkeit, poröse Trägerbeads für die Aufnahme von weiteren Waschmittelbestandteilen zu schaffen, die zum überwiegenden Anteil aus Aniontensiden gebildet sind.

In Sonderfällen ist hier sogar die Möglichkeit gegeben, praktisch ohne Mitverwendung von Hilfsstoffen die porösen Träger-beads aus dem Aniontensid aufzubauen. Ein solcher Fall ist bei den sogenannten Di-Salzen gegeben, die bekanntlich Salze, vorzugsweise die Alkalisalze von waschaktiven alpha-sulfonierten Sulfofettsäuren darstellen. Di-Salze beziehungsweise Di-Salzgemische technischer Reinheit können nicht nur ohne Zusatz von weiteren Hilfskomponenten zum porösen Trägerbead aufgearbeitet werden, sie können ihrerseits Hilfsstoffe für thermisch weniger stabile Aniontensidkomponenten wie FAS, FAES, MES, ABS und dergleichen sein.

### Tenside

In einer bevorzugten Ausführungsform der Erfindung wird das poröse Trägerbead in seiner Grundstruktur unter Mitverwendung von Aniontensiden aus den Klassen der Carboxylate, der Sulfonate einschließlich der Estersulfonate, der Di-Salze und/ oder der Sulfate ausgebildet. Die Trägerbeads können dabei ausgewählte Aniontenside oder Gemische mehrer Aniontenside enthalten, die in der Regel in Abmischung mit wasserlöslichen und/oder feinteiligen wasserunlöslichen anorganischen und/ oder organischen Hilfs- und/oder Wertstoffen ohne Tensidcharakter aufgebaut sind. In der hier betroffenen Ausführungsform der Erfindung ist weiterhin bevorzugt, den Gehalt solcher Trägerbeads an anorganischen und/oder organischen Hilfsstoffen in Mengen nicht über etwa 60 Gew.-% und vorzugsweise im Bereich von etwa 5 bis 50 Gew.-% zu wählen, wobei wiederum Mengen dieser Hilfsstoffe zur hinreichenden Stabilisierung der Aniontenside auch im Temperaturbereich von etwa 100 bis 120°C in Mengen von etwa 10 bis 30 Gew.-% besonders bevorzugt sind. Alle diese Gew.-%-Angaben beziehen sich dabei auf das unbeladene getrocknete Trägerbead.

Wichtige Ausführungsformen der Erfindung sehen hier vor, daß die Trägerbeads in ihrer Korngrundstruktur die Aniontenside in Abmischung mit hinreichend temperaturstabilen sonstigen Wertstoffen des Bereichs der Netz-, Wasch- und/oder Reinigungsmittel enthalten. Eine zusammenfassende Aufzählung geeigneter Wertstoffe wird nachfolgend noch gegeben. In Betracht kommen in einer wichtigen weiteren Ausführungsform als Zusatzstoffe insbesondere aber auch solche Komponenten, die zu einer Verbesserung der Aniontensidauflösung in wäßrigen Phasen befähigt sind. Beispiele hierfür sind übliche Dispergatoren, Hydrotrope, Strukturbrecher und dergleichen.

### Auftragsmassen

Wie eingangs angegeben betrifft die Erfindung in einer besonders wichtigen Ausführungsform das wenigstens 2-stufig herzustellende kornförmige Gut, das die zuvor geschilderten Trägerbeads mit einer als "Auftragsmasse" bezeichneten Beladung enthält, die ihrerseits unter Mitverwendung von Wertstoffen aus dem Gebiet der Netz-, Wasch- und/oder Reinigungsmittel zusammengestellt ist.

Diese Auftragsmasse kann zwar im wesentlichen auf die Oberfläche beziehungsweise die äußeren Bereiche des primär geformten Trägerbeads aufgetragen sein, in der bevorzugten Ausführungsform ist jedoch wenigstens ein Anteil der Auftragsmasse möglichst weitgehend durchdringend in das poröse Trägerbeadkorn eingetragen. Verständlich ist daraus, daß erfindungsgemäß bevorzugte Auftragsmassen bei Applikationstemperatur fließfähige und Wert-und/oder Hilfsstoffe des angegebenen Einsatzgebietes enthaltende Zubereitungen sind. Es kann dabei bevorzugt sein, daß diese Innenstruktur zu wenigstens 10 Vol.-% und vorzugsweise zu wenigstens etwa 50 Vol.-% - bezogen jeweils auf das zugängliche Innenvolumen des Trägerbeads - mit der Auftragsmasse belegt ist. Die Bestimmung des zugänglichen Innenvolumens erfolgt dabei in an sich bekannter Weise, z.B. durch dessen Ermittlung mittels flüssigem Quecksilber. In wichtigen Ausführungsformen des erfindungsgemäßen Handelns ist das zugängliche Innenvolumen des Träger-beads praktisch vollständig mit Auftragsmasse gefüllt.

Darüber hinaus liegen in einer wichtigen Ausführungsform nur begrenzte Anteile an Auftragsmasse auf den Trägerbead-Außenflächen vor, die mengenmäßig höchstens etwa der Innenbefüllung entsprechen, insbesondere aber darunter liegen. Es kann hier zweckmäßig sein, daß keine substantiellen Mengen der Auftragsmasse im Korn-Außenbereich vorliegen. Das kann beispielsweise dann von Vorteil sein, wenn es sich bei der Auftragsmasse um bei Raumtemperatur fließfähige und/oder klebrige Materialien handelt.

In den Rahmen des erfindungsgemäßen Handelns fallen aber auch darüber hinausgehende Ausgestaltungen der hier betroffenen Materialien. So können Innenbeladung und Außenbeladung der Trägerbeads mit Auftragsmassen unterschiedlicher Zusammensetzung vorgenommen werden. In einer ersten Beladungsstufe wird hier beispielsweise das zur Verfügung stehende Trägerbead-Innenvolumen anteilsweise oder vollständig mit einer ersten Auftragsmasse belegt. In einem zweiten Verfahrensschritt kann dann zusätzlich eine gleiche oder in anderer Form zusammengesetzte Auftragsmasse in das feinkörnige Gut aufgetragen werden. Hier wird sich diese zweite Auftragsmasse dann überwiegend oder ausschließlich auf der Außenfläche des Korns verfestigen. Die Bedeutung einer solchen Maßnahme wird am nachfolgenden Beispiel ersichtlich: In der ersten Stufe der Beladung des porösen Trägerbeads mit Auftragsgut kann beispielsweise ein bei Raumtemperatur fließfähiges Material in den porösen Feststoffträger eingebracht werden. Soll jetzt ein Ausbluten beziehungsweise Herausdiffundieren dieser fließfähigen Masse im Rahmen der Zusammenstellung frei wählbarer Wertstoffrezepturen und/oder für besonders lagerstabile Wertstoffmischungen sicher ausgeschlossen werden, so kann das mit der Flüssigphase beladene Trägerbeadkorn mit einem Mantel eines anorganischen und/oder organischen Feststoffs umhüllt werden, der letztlich im beabsichtigten Einsatzzweck - beispielsweise durch Auflösung in der wäßrigen Flotte - vergeht und damit dann das Trägerbead mit seiner Füllung dem beabsichtigten Einsatzzweck zugänglich macht.

Aus den Erkenntnissen zur feinporösen Struktur der Träger-beads, aus der im jeweiligen Einzelfall gewählten Zusammensetzung der Trägerbeads und den bekannten Anforderungen von Netz-, Wasch- und/oder Reinigungsmitteln nach dem Wissen des Standes der Technik, leiten sich die Überlegungen zur Auswahl der in zweiter Verfahrensstufe aufzubringenden und einzutragenden Auftragsmasse ab. Grundsätzlich gilt, daß hier ausgewählte Wertstoffe oder auch Wertstoffgemische als solche, gewünschtenfalls aber auch in Abmischung mit Hilfsstoffen, eingesetzt werden können. Im Bereich der Hilfsstoffe kann dabei unterschieden werden zwischen solchen Hilfsstoffen, die zum Verbleib im beladenen Trägerbead gedacht sind und Hilfsstoffen, die lediglich den imprägnierenden Antrag der Auftragsmasse erleichtern. Die zuletzt genannten Hilfsstoffe sind in der Regel Flüssigkeiten, wobei hier dem Wasser die entscheidende Bedeutung zukommt. So können die Komponenten der Auftragsmasse - soweit sie nicht selber bei Applikationstemperatur hinreichend fließfähige Flüssigphasen sind - in Form insbesondere wäßriger Lösungen, Emulsionen und/oder Dispersionen oder aber auch als Schmelzen in das Trägerbead eingetragen werden. Nach hinreichender Imprägnierung kann erforderlichenfalls das als Hilfsflüssigkeit eingesetzte Wasser ganz oder anteilsweise aus dem jetzt beladenen Material abgezogen werden.

In einer weiterführenden Ausführungsform der Erfindung kann hier aber auch gleich davon Gebrauch gemacht werden, daß beim Eintrag solcher Flüssigphasen und insbesondere solcher wäßriger Flüssigphasen, sich die bekannten Möglichkeiten der Granulierung des zunächst feinkörnigen oder pulverförmigen Materials erschließen, so daß in dieser Ausführungsform der Eintrag der Auftragsmasse in das Trägerkorn und dessen Imprägnierung mit diesen Wertstoffen verbunden werden kann mit einer Überführung eines vergleichsweise feinteiligen Materials in gröberkörnige Agglomerate. Insoweit wird auf das allgemeine Fachwissen verwiesen.

Zur Auswahl der Komponenten für die Beschichtung beziehungsweise durchdringende Imprägnierung der porösen Trägerbeads mit Wert- und gegebenenfalls Hilfsstoffen aus dem angegebenen Sachgebiet gelten wieder die allgemeinen Überlegungen des Fachmanns, insbesondere zur beabsichtigten Zusammensetzung des wasch- beziehungsweise reinigungsaktiven Mehrkomponentengemisches, zur Temperatursensibilität einzelner Komponenten, zur Einstellung gezielter Effekte im Rahmen der Überführung der zunächst trockenen Wertstoffzubereitung in wäßrige Lösungen, Emulsionen und/oder Suspensionen im praktischen Einsatz und dergleichen. Unter Berücksichtigung der im Rahmen der Erfindungsbeschreibung erläuterten Prinzipien für den Aufbau eines solchen Mehrkomponentenmaterials im Sinne der Erfindung wird fachmännisches Handeln in vielgestaltiger Weise möglich. Ohne Anspruch auf Vollständigkeit seien dementsprechend hier die nachfolgenden Angaben zur Beschaffenheit und Einsatz form geeigneter und wichtiger Komponenten zur Auftragsmasse gemacht.

Ein wichtiger allgemeiner Gedanke zur Auswahl wird durch die Tatsache bestimmt, daß der Eintrag der Auftragsmasse bei Raumtemperatur oder auch bei erhöhten Temperaturen - praktisch bis hin zu etwa 100°C - erfolgen kann. Dabei ist von besonderem Vorteil, daß in dieser zweiten Arbeitsstufe der Beladung der primär gewonnenen Trägerbeads nachhaltige thermische und/oder hydrolytische Beanspruchungen des Gutkornes nicht mehr gegeben sind oder mit Sicherheit ausgeschaltet werden können. Die Beladung kann üblicherweise einfach in Umgebungsluft, gewünschtenfalls aber auch in inerter Atmosphäre beispielsweise unter Stickstoff, erfolgen. Der Eintrag und die Imprägnierung der Trägerbeads mit der fließfähigen Zubereitung der Auftragsmasse kann bei Raumtemperatur oder nur mäßig erhöhten Temperaturen, beispielsweise im Temperaturbereich bis etwa 80°C erfolgen, üblicherweise ist der Temperaturbereich von Raumtemperatur bis etwa 75°C und insbesondere der Bereich von etwa Raumtemperatur bis 50°C besonders geeignet.

Zur Imprägnierung der Trägerbeads geeignete fließfähige, insbesondere flüssige Komponenten sind wiederum waschund/oder reinigungsaktive Tenside. In Betracht kommen hier insbesondere Niotenside, wie sie in der täglichen Praxis der Zusammenstellung von Wasch- und Reinigungsmitteln in großem Umfange zur Verwendung kommen und sich dadurch auszeichnen, daß sie bei Raumtemperatur oder bei den angegebenen schwach erhöhten Temperaturen in Flüssigphase vorliegen. Zur Auswahl geeigneter Niotenside wird auf das allgemeine Fachwissen verwiesen, wobei im nachfolgenden noch summarische Angaben dazu gemacht werden.

Als tensidische Komponenten der Auftragsmasse können aber auch aniontensidische Verbindungen in Betracht kommen, die aufgrund ihrer thermischen Instabilität und/oder Klebrigkeit im Temperaturbereich von etwa 100 bis 120°C in der Phase des überhitzten Wasserdampfes für den Einsatz bei der Herstellung der Trägerbeads ausscheiden oder zumindest Schwierigkeiten bereiten. Solche aniontensidischen Komponenten können gegebenenfalls in Form einer Schmelze oder insbesondere in Form wäßriger Emulsionen in das Trägerbead eingebracht werden.

Wichtige weitere übliche Komponenten aus dem Gebiet von Wasch- und Reinigungsmitteln sind insbesondere temperatursensitive Bestandteile oder sonstige Komponenten, deren Mitverwendung beim Herstellungsprozeß der Trägerbeads aus allgemeinen Überlegungen des Fachmanns ausscheiden. Ein typisches Beispiel hierfür sind beispielsweise Duft- und Parfümstoffe oder solche Komponenten, die im Auflösungsprozeß des körnigen Mehrstoffgutes im praktischen Einsatz so rasch wie möglich in die wäßrige Phase übergehen sollen, ohne durch einen vergleichsweise langsameren Auflösungsprozeß tensidischer Wertstoffe in diesem Übergang in die wäßrige Phase behindert zu werden. Grundsätzlich in Betracht kommen aber auch alle sonstigen Wertstoffe des Bereiches der Netz-, Waschund/oder Reinigungsmittel, beispielsweise also weitere organische und/oder anorganische Builder/Co-Builder, Vergrauungsund Verfärbungsinhibitoren, Schaumregulatoren, Bleichaktivatoren, optische Aufheller und Farbstoffe oder auch ganz einfach wasserlösliche Alkalisierungsmittel.

In einer wichtigen Ausführungsform macht die Erfindung davon Gebrauch, daß mit der hochporösen Grundstruktur des Träger-beads ein schwammartiges Saugvermögen verbunden und damit die Möglichkeit gegeben ist, zu einer durchdringenden Imprägnierung des Trägerbeads mit sekundär eingetragenen Komponenten zu kommen. Werden im Trägerbead tensidische Komponenten eingesetzt, die aus sich heraus vergleichweise schwer löslich beziehungsweise schwer emulgierbar oder dispergierbar in wäßrigen Phasen sind, so kann die Beladung des porösen Trägerbeads mit der Auftragsmasse den Eintrag lösungsvermittelnder Hilfsstoffe und/oder den Eintrag sogenannter Strukturbrecher zum Gegenstand haben. Es ist sofort einleuchtend, daß in dieser Weise eine optimale Vermischung der schwerlöslichen Wertstoffanteile mit Hilfsstoffen zur Verbesserung der Auflösbarkeit beziehungsweise Emulgierbarkeit sichergestellt werden kann.

In diesem Zusammenhang sieht die Erfindung eine weitere Möglichkeit vor: Die zur verbesserten Auflösung im zweiten Arbeitsschritt in das hochporöse Trägerbead einzutragenen Hilfsstoffe beziehungsweise Strukturbrecher, können dahingehend weiter modifiziert beziehungsweise ausgewählt werden, daß auch noch die Schmelz- beziehungsweise Verflüssigungstemperatur der einzutragenden Hilfs- beziehungsweise Wertstoffe berücksichtigt wird. Es lassen sich dabei zwei grundsätzliche Möglichkeiten unterscheiden: In einer ersten Ausführungsform wird das Trägerbead mit einer bei Raumtemperatur oder nur sehr schwach erhöhten Temperaturen flüssigen zweiten Wertstoffphase gefüllt. Für zahlreiche Anwendungszwecke kann das hinreichend oder gar wünschenswert sein. In einer zweiten Ausführungsform der hier betroffenen Ausgestaltung werden jetzt aber Hilfsstoffe gewählt, die bei Raumtemperatur und auch noch bei mäßig erhöhten Temperaturen, Feststoffe sind, wie sie beispielsweise bei der Lagerung und/oder bei der Verarbeitung solcher Wertstoffe beziehungsweise Wertstoffgemische auf das kornförmige Gut einwirken. Ist durch den Schmelzpunkt beziehungsweise Schmelzbereich der imprägnierenden Auftragsmasse sichergestellt, daß das im zweiten Arbeitsschritt eingetragene Gut auch bei Temperaturbeanspruchung in der Feststoffphase verbleibt, so kann damit die Fixierung der hochporösen Trägerbeadstruktur bis zum praktischen Einsatz als Netz-, Wasch- und/oder Reinigungsmittel sichergestellt werden. Darüber hinaus sind auch bei längeren Lagerzeiten und/oder bei Abmischung mit weiteren Wirkstoffkomponenten unerwünschtes Entmischen oder Ausbluten einer fließfähigen Phase unterbunden.

Die poröse Grundstruktur des Trägerbeads kann - wie angegeben - mit der Auftragsmasse vollständig ausgefüllt werden, es ist aber auch möglich nur einen Anteil dieser porösen Grundstruktur mit weiteren Wert- und gegebenenfalls Hilfsstoffen auszufüllen und zum Rest die poröse Leerstruktur der Träger-beads zu erhalten. Die Erfindung sieht damit vor, die Auftragsmasse der zweiten Stufe in Mengen - Gew.-% bezogen auf Trägerbead-Trockengewicht - von wenigstens etwa 1 Gew.-% bis zur maximalen Befüllbarkeit des Trägerbeads einzusetzen. Mengen der Auftragsmasse im Bereich von etwa 3 bis 100 Gew.-% und insbesondere im Bereich von etwa 3 bis 80 Gew.-% können besonders zweckmäßig sein. In vielen Fällen wird die Menge der im zweiten Arbeitsschritt einzutragenden Wert- und gegebenenfalls Hilfsstoffe durch rezepturabhängige Überlegungen bestimmt. Hier kann es zweckmäßig sein, Mengen der Auftragsmasse im Bereich bis etwa 50 Gew.-% einzusetzen, wobei hier wiederum Mengen im Bereich von etwa 10 bis 35 Gew.-% der Auftragsmasse - bezogen auf Trägerbead-Trockengewicht - häufig wünschenswert sind. Insbesondere im Bereich eingeschränkter Mengen der Auftragsmasse - also beispielsweise Mengen bis zu etwa 50 Gew.-% und insbesondere Mengen im Bereich von etwa 10 bis 35 Gew.-% der Auftragsmassen - werden die in das Trägerbead eingetragenen Anteile vollständig oder im wesentlichen vollständig in das Innere des Korns aufgenommen.

Wie bereits angegeben, sind besonders wichtige Komponenten für die Zusammenstellung der Auftragsmasse bei aniontensidhaltigen Trägerbeads wasch- beziehungsweise reinigungsaktive **Niotenside**, die bevorzugt den Klassen der organophile Reste aufweisenden Polyglycolether, entsprechender Polyglycolester, Mischether und/oder Mischester, den wasch- beziehungsweise reinigungsaktiven Alkylpolyglycosidverbindungen, den Zucker- und/oder Eiweißtensiden und/oder auch der Klasse der nichtionischen Spezialtenside zugehören.

Niotensidische Verbindungen können aber insbesondere auch als lösungsvermittelnde Dispergatoren, Strukturbrecher und dergleichen besondere Bedeutung haben. Hier ist dann die Struktur der einzutragenden Komponenten nicht auf die Aktivität als Wasch- und Reinigungsmittel abgestellt, die beabsichtigte Aufgabe der erleichterten Auflösung der Haupttensidkomponenten in wäßriger Lösung steht im Vordergrund. Im einzelnen kann auch hier auf das Fachwissen verwiesen werden.

Die erfindungsgemäße Lehre ist anwendbar auf Wertstoffe beziehungsweise Wertstoffgemische des Netz-, Wasch- und/oder Reinigungsmittelgebietes, die der Klasse entsprechender synthetischer Wertstoffe oder entsprechenden Wertstoffe natürlichen Ursprungs zuzuordnen sind. Besonders wichtige Aniontensidkomponenten für den Aufbau des Trägerbeads sind Alkyl benzolsulfonate (ABS), Fettalkoholsulfate (FAS), Fettalkoholethersulfate (FAES), alpha-Methylestersulfonate (MES) und/oder Di-Salze, wobei beim Vorliegen von ABS, FAS, FAES und/oder MES als Hauptbestandteil des Trägerbeads die Mitverwendung beschränkter Mengen an temperaturstabilen, im Trockenzustand nicht-klebrigen löslichen und/oder feinteilig unlöslichen Komponenten organischer und/oder anorganischer Natur bevorzugt ist.

Wie bereits angegeben nehmen die Di-Salze, d.h. die Alkalisalze waschaktiver alpha-Sulfofettsäuren, insoweit eine Sonderstellung ein, als sie befähigt sind, sowohl die Funktion der aniontensidischen Hauptkomponente zu bilden als auch als temperaturstabilisierender und Klebrigkeit absenkender Zusatzstoff im Trägerbead in Abmischung mit anderen tensidischen Verbindungen Verwendung finden können.

Die Lehre der Erfindung umfaßt ausdrücklich auch die in der geschilderten Weise bestimmt ausgestalteten porösen und nicht beladenen Trägerbeads mit einem Gehalt an Wert- und gegebenenfalls Hilfsstoffen des angegebenen Anwendungsgebietes bei wobei gleichzeitig verbesserter Wasserlöslichkeit, wobei das getrocknete Trägerbead im erfindungsgemäßen Sinne im Temperaturbereich von 100 bis 110°C, bevorzugt im Temperaturbereich bis 120°C, als Feststoff vorliegt, dessen Plastizität und Oberflächenklebrigkeit derart eingeschränkt sind, daß substantielle Verklebungen der Teilchen miteinander und/oder deren offenporigen Innenstruktur auch unter den Bedingungen der Einwirkung des überhitzten Wasserdampfes ausscheiden.

Die Lehre der Erfindung umfaßt wie angegeben das Verfahren zur Herstellung des kornförmigen Gutes, das auf einem hochporösen Trägerbead in zweiter und gegebenenfalls weiteren Arbeitsstufe(n) aufgetragene und insbesondere durch Imprägnierung eingetragene Wert-und/oder Hilfsstoffe des hier betroffenen Gebietes aufweist. Dieses Verfahrens kennzeichnet sich dadurch, daß man wäßrige Zubereitungen der das Trägerbead bildenden Materialien der Trocknung in überhitztem Wasserdampf, insbesondere einer entsprechenden Sprühtrocknung und/oder Trocknung in der Wirbelschicht, unterwirft und das gebildete Trägerbead nachfolgend mit einer fließfähigen Zubereitung von Wertstoffen des Gebietes der Netz-, Wasch-und/oder Reinigungsmittel beaufschlagt, dabei bevorzugt durchdringend imprägniert und erforderlichenfalls das imprägnierte Gut einer Nachtrocknung unterwirft.

Der Gutauftrag auf das vorgebildete Trägerbead erfolgt bevorzugt bei Temperaturen von höchstens etwa 110°C und insbesondere im Bereich von 75 bis etwa 100°C. Es ist dabei möglich, den Gutauftrag in unmittelbarem Anschluß an den Austrag des warmen Gutes aus der Zone der Heißdampftrocknung vorzunehmen, so daß sich eine separate Stufe der Wiederaufheizung der getrockneten Trägerbeads erübrigt. Der Gutauftrag kann in an sich bekannter Weise beispielsweise in der Wirbelschicht oder in geeigneten Mischvorrichtungen stattfinden. Dabei kann es von Vorteil sein, die zur Imprägnierung eingesetzte fließfähige Wertstoffzubereitung und/oder auch das Trägerbead als solches auf angehobene Temperaturen im Arbeitsbereich vorzuwärmen.

Der Eintrag der fließfähigen Zubereitungen in das Trägerbead kann - wie zuvor angegeben - dazu benutzt werden, ein feinteiliges Gut in an sich bekannter Weise zu granulieren. Werden bei dem Antrag der Imprägniermasse und/oder im Rahmen einer gleichzeitig stattfindenden Granulierung Hilfsflüssigkeiten, insbesondere Wasser, mitverwendet, so kann es zweckmäßig sein, wenigstens anteilsweise dieses Wasser durch eine Nachtrocknung aus dem imprägnierten Wertstoffgemisch wieder zu entfernen, sofern nicht durch Mitverwendung geeigneter und insbesondere kristallwasserbindender Mischungskomponenten im Wertstoffgemisch vom Prinzip der "Inneren Trocknung" insbesondere durch Bindung des Wassers als Kristallwasser, Gebrauch gemacht werden kann.

### Wertstoffe bzw. Wertstoffgemische

Die erfindungsgemäßen Wertstoffe beziehungsweise Wertstoffgemische können in einem breiten Bereich von Schüttgewichten hergestellt werden. Dabei gilt das sowohl für die Ausführungsform der porösen noch nicht imprägnierten Trägerbeads als insbesondere für die mit Auftragsmasse beladenen Mehrkomponentenmassen im Sinne des in wenigstens zwei Verfahrensstufen hergestellten kornförmigen Gutes. So kann die Schüttdichte des porösen Trägerbeads in bevorzugten Ausführungsformen oberhalb etwa 200 g/l und insbesondere oberhalb etwa 300 g/l liegen, wobei durch Wahl der geeigneten Verfahrensbedingungen im Rahmen der Heißdampftrocknung in aller Regel Schüttdichten von wenigstens etwa 350 g/l einzustellen sind. Durch geeignete Ausgestaltung der Beladung eines solchen porösen Trägerbeads mit Wert- und/oder Hilfsstoffen ist eine substantielle Erhöhung der Schüttdichte möglich. Schüttdichten des Bereichs von 350 bis 700 g/l, gewünschtenfalls aber auch darüber, können eingestellt werden. Im einzelnen sind hier diesbezügliche übliche Überlegungen des Fachmannes miteinzusetzen. An einem Beispiel wird das sofort ersichtlich: Die Mitverwendung anorganischer kristallisierender wasserlöslicher Hilfs- und/oder Wertstoffe und ihr Anteil im Fertigprodukt bestimmt zu substantiellem Ausmaß die einstellbare Schüttdichte des Fertigproduktes.

Im nachfolgenden werden ohne Anspruch auf Vollständigkeit weiterführende Angaben zu Wert- und Hilfsstoffen des hier betroffenen Sachgebietes gemacht, wobei ausdrücklich hiermit auf das darüberhinausgehende allgemeine Wissen der Fachwelt verwiesen wird.
a1) Als **anionische Tenside mit Sulfat- oder Sulfonatstruktur** eignen sich beispielsweise Alkylbenzolsulfonate, Alkansulfonate, Olefinsulfonate, Alkylethersulfonate, Glycerinethersulfonate, α-Methylestersulfonate, Sulfofettsäuren, Alkylsulfate, Fettalkoholethersulfate, Glycerinethersulfate, Hydroxymischethersulfate, Monoglycerid(ether)sulfate, Fettsäureamid(ether)sulfate, Sulfosuccinate, Sulfosuccinamate, Sulfotriglyceride, Isethionate, Tauride und Alkyloligoglucosidsulfate. Sofern die anionischen Tenside Polyglycoletherketten enthalten, können sie eine konventionelle, vorzugsweise jedoch eine eingeengte Homologenverteilung aufweisen.
a2) Als **anionische Tenside mit Carbozylastruktur** kommen zum Beispiel Seifen aus natürlichen oder synthetischen, vorzugsweise gesättigten Fettsäuren brauchbar. Geeignet sind insbesondere aus natürlichen Fettsäuren, zum Beispiel Kokos-, Palmkern- oder Talgfettsäuren abgeleitete Seifengemische. Bevorzugt sind solche, die zu 50 bis 100% aus gesättigten C₁₂₋₁₈-Fettsäureseifen und zu 0 bis 50% aus Ölsäureseifen **zusammengesetzt** sind. Daneben eignen sich ferner auch Amidseifen, Ethercarbonsäure-Salze und Sarcosinate.
a3) Im Sinne der vorliegenden Erfindung sind unter dem Begriff "anionische Tenside mit Sulfat-, Sulfonat- und/oder Carboxylatstruktur" auch solche **amphoteren bzw. zwitterionischen Tenside** zu verstehen, die mindestens eine dieser Gruppen im Molekül enthalten. Typische Beispiele sind Alkylamidobetaine, Aminopropionate, Aminoglycinate, Imidazoliniumbetaine und Sulfobetaine.
   Die anionischen Tenside können in Form ihrer Natrium-, Kalium- und Ammoniumsalze sowie als lösliche Salze organischer Basen, wie Mono-, Di- oder Triethanolamin vorliegen. Bei genannten Stoffen handelt es sich ausschließlich um bekannte Verbindungen. Hinsichtlich ihrer Struktur und Herstellung sei auf einschlägige Übersichtsarbeiten beispielsweise **J.Falbe (ed.), "Surfactants in Consumer Products", Springer Verlag, Berlin, 1987, S.54-124 oder J.Falbe (ed.), "Katalysatoren, Tenside und Mineralöladditive", Thieme Verlag, Stuttgart, 1978**, S.123-217 verwiesen.
b) **Nichtionische Tensidverbindungen** im Sinne der erfindungsgemäßen Lehre können als Wertstoffe die verschiedensten Aufgaben wahrnehmen. Einerseits sind sie im klassischen Sinne synergistisch mit den Aniontensiden zusammenwirkende waschaktive Komponenten. Zum anderen kann der Klasse von Niotensiden insbesondere aber auch weiterführende Bedeutung, beispielsweise im Sinne von Dispergatoren, Strukturbrechern und dergleichen, zukommen.
   Niotensidverbindungen können in an sich bekannter Weise bei Raumtemperatur flüssig oder fest sein. Unter Verweisung auf allgemeines Fachwissen seien hier aufgezählt:
bl) Die als nichtionische Tenside eingesetzten flüssigen **Alkoholethoxylate** leiten sich beispielsweise von primären Alkoholen mit vorzugsweise 9 bis 18 Kohlenstoffatomen und durchschnittlich 1 bis 12 Mol Ethylenoxid ab, in denen der Alkoholrest linear oder in 2-Stellung methylverzweigt sein kann, beziehungsweise lineare und methylverzweigte Reste im Gemisch enthalten kann, so wie sie üblicherweise in Oxoalkoholresten vorliegen. Insbesondere sind jedoch lineare Reste aus Alkoholen nativen Ursprungs mit 12 bis 18 Kohlenstoffatomen bevorzugt, wie z.B. aus Kokos-, Talgfett- oder Oleylalkohol.
   Insbesondere bevorzugt können sein C₁₂₋₁₄-ASkohole mit 3 EO oder 4 EO, C₉₋₁₁-Alkoholen mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄- Alkohol mit 3 EO und C₁₂₋₁₈-Alkohol mit 5 EO.
   Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Insbesondere sind Alkoholethoxylate bevorzugt, die durchschnittlich 2 bis 8 Ethylenoxidgruppen aufweisen.
b2) Als weitere nichtionische Tenside können auch **Alkyloligoglykoside** der allgemeinen Formel (I) eingesetzt werden,

   **R**^{**1**}**-O-[G]**_{**x**} **(I)**

   in der R¹ einen primären geradkettigen oder in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligo- glykosiden angibt, ist eine beliebige Zahl zwischen 1 und 10 und liegt beispielsweise im Bereich VOR etwa 1,2 bis 4, insbesondere bei 1,2 bis 2.
b3) Auch nichtionische Tenside vom Typ der **Aminoxide**, beispielsweise N-Kokosalkyl-N,N-dimethylaminoxid und N-Talgalkyl-N,N-dihydroxyethylaminoxid, und der **Fettsäurealkanolamide** können geeignet sein. Die Menge dieser nichtionischen Tenside beträgt vorzugsweise nicht mehr als die der ethoxylierten Fettalkohole, insbesondere nicht mehr als die Hälfte davon.
b4) Weitere geeignete Tenside sind **Polyhydroxyfettsäureamide** der Formel **(II**), 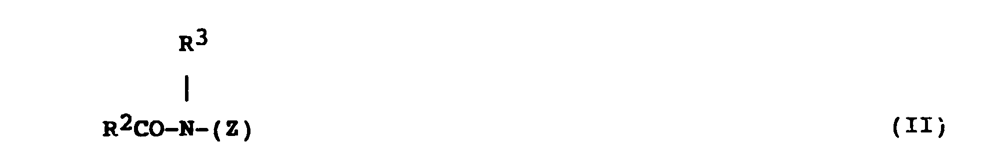 in der R²CO für einen aliphatischen Acylrest mit 6 bis 22 Kohlenstoffatomen, R³ für Wasserstoff, einen Alkyl-oder Hydroxyalkylrest mit 1 bis 4 Kohlenstoffatomen und (Z) für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können. Hinsichtlich der Verfahren zu ihrer Herstellung sei auf die US-Patentschriften **US 1,985,424, 2,016,962** und **2,703,798** sowie die internationale Patentanmeldung **WO 92/06984** (Procter & Gamble) verwiesen. Vorzugsweise leiten sich die Polyhydroxyfettsäureaminde von reduzierenden Zuckern mit 5 oder 6 Kohlenstoffatomen, insbesondere von der Glucose ab. Die bevorzugten Polyhydroxyfettsäureamide stellen daher Fettsäure-N-alkylglucamide dar, wie sie durch die Formel (III) wiedergegeben werden: 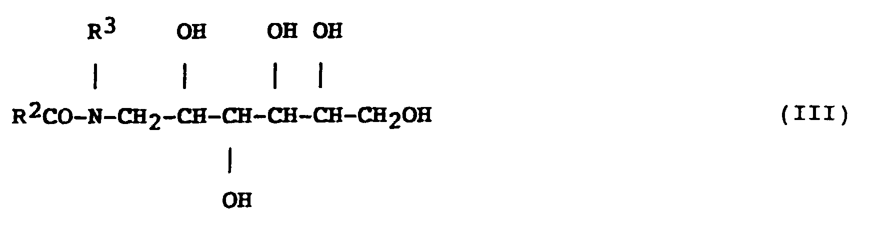 Vorzugsweise werden als Polyhydroxyfettsäureamide Fett-säure-N-alkyl-glucamide der Formel (III) eingesetzt, in der R³ für Wasserstoff oder eine Amingruppe steht und R²CO für den Acylrest der Capronsäure, Caprylsäure, Caprinsäure, Laurinsäure, Myristinsäure, Palmitinsäure, Palmoleinsäure, Stearinsäure, Isostearinsäure, Ölsäure, Elaidinsäure, Petroselinsäure, Linolsäure, Linolensäure, Arachinsäure, Gadoleinsäure, Behensäure oder Erucasäure beziehungsweise derer technischer Mischungen steht. Besonders bevorzugt sind Fettsäure-N-alkylglucamide der Formel (III), die durch reduktive Aminierung von Glucose mit Methylamin und anschließende Acylierung mit Laurinsäure oder C₁₂₋₁₄-Kokosfettsäure beziehungsweise einem entsprechenden Derivat erhalten werden.
c) Als **organische und anorganische Builder- beziehungsweise Gerüstsubstanzen** eignen sich schwach sauer, neutral oder alkalisch reagierende lösliche und/oder unlösliche Komponenten, die Calciumionen auszufällen oder komplex zu binden vermögen.
c1) Geeignete und insbesondere ökologisch unbedenkliche Buildersubstanzen, wie feinkristalline, synthetische wasserhaltige **Zeolithe** vom Typ NaA, die ein Calciumbindevermögen im Bereich von 100 bis 200 mg CaO/g (gemäß den Angaben in **DE-A 24 12 837**) aufweisen, finden eine bevorzugte Verwendung. Ihre mitt- lere Teilchengröße liegt üblicherweise im Bereich von 1 bis 10 µm (Meßmethode: Coulter Counter, Volumenverteilung). Geeignete Substitute beziehungsweise Teilsubstitute für Phosphate und Zeolithe sind kristalline, schichtförmige Natriumsilicate der allgemeinen Formel **(IV)**,

   **NaMSi**_{**x**}**O**_{**2x+1**} *** y H**_{**2**}**O** (IV)

   wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilicate werden beispielsweise in der europäischen Patentanmeldung **EP-A 0 164 514** beschrieben. Bevorzugte kristalline Schichtsilicte der Formel **(IV)** sind solche, in denen M für Natrium steht und x die Werte 2 oder 3 annimmt. Insbesondere sind sowohl betaals auch delta-Natriumdisilicate der Formel **(V)**

   **Na**_{**2**}**Si**_{**2**}**O**_{**5**} *** y H**_{**2**}**O** (V)

   bevorzugt, wobei beta-Natriumdisilikat beispielsweise nach dem Verfahren erhalten werden kann, das in der deutschen Patentanmeldung **DE-A 39 39 919** beschrieben ist.
c2) Als weitere Builderbestandteile, die insbesondere zusammen mit den Zeolithen eingesetzt werden können, kommen **Schichtverbindungen** vom Hydrotalcit-Typ sowie (co-) polymere **Polycarboxylate** in Betracht, wie Polyacrylate, Polymethacrylate und insbesondere Copolymere der Acrylsäure mit Maleinsäure, vorzugsweise solche aus 50% bis 10% Maleinsäure. Die relative Molekülmasse der Homopolymeren liegt im allgemeinen zwischen 1.000 und 100.000, die der Copolymeren zwischen 2.000 und 200.000, vorzugsweise 50.000 bis 120.000, bezogen auf freie Säure. Ein besonders bevorzugtes Acrylsäure-Maleinsäure-Copolymer weist eine relative Molekülmasse von 50.000 bis 100.000 auf. Geeignete, wenn auch weniger bevorzugte Verbindungen dieser Klasse sind Copolymere der Acrylsäure oder Methacrylsäure mit Vinylethern, wie Vinylmethylethern, in denen der Anteil der Säure mindestens 50% beträgt. Brauchbar sind ferner Polyacetalcarbonsäuren, wie sie beispielsweise in den US-Patentschriften **US 4,144,226** und **US 4,146,495** beschrieben sind sowie polymere Säuren, die durch Polymerisation von Acrolein und anschließende Disproportionierung mittels Alkalien erhalten werden und aus Acrylsäureeinheiten und Vinylalkoholeinheiten beziehungsweise Acroleineinheiten aufgebaut sind.
c3) Brauchbare organische Gerüstsubstanzen sind ferner die bevorzugt in Form ihrer Natriumsalze eingesetzten **Polycarbonsäuren**, wie Citronensäure, Ethylendiamintetraessigsäure (EDTA) und Nitrilotriessigsäure (NTA), sofern ein derartiger Einsatz aus ökologischen Gründen nicht zu beanstanden ist.
c4) Weitere **geeignete Inhaltsstoffe** der Mittel sind wasserlösliche anorganische Alkalisierungsmittel wie Bicarbonate, Carbonate oder Silicate; insbesondere werden Alkalicarbonat und Alkalisilicat, vor allem Natriumsilicat mit einem molaren Verhältnis von Na₂O : SiO₂ von 1 : 1 bis 1 : 4,0, eingesetzt.
d) Zu den **sonstigen Waschmittelbestandteilen** zählen Vergrauungsinhibitoren (Schmutzträger), Schaumregulatoren, Bleichaktivatoren, optische Aufheller, textilweichmachende Stoffe, Farb- und Duftstoffe sowie Neutralsalze. Wichtige weitere Wasch- und Reinigungsmittelbestandteile sind beispielsweise Bleichmittel und Enzyme. Erfindungsgemäß werden diese Komponenten allerdings getrennt letztlich zum Einsatz kommenden Wertstoffgemische zugesetzt.
d1) Um beim Waschen bei Temperaturen von 60°C und darunter eine verbesserte Bleichwirkung zu erreichen, können **Bleichaktivatoren** eingearbeitet werden. Beispiele hierfür sind mit H₂O₂ organische Persäuren bildende N-Acylbeziehungsweise O-Acyl-Verbindungen, vorzugsweise N,N'-tetraacylierte Diamine, wie N,N,N',N'-Tetraacetylethylendiamin, ferner Carbonsäureanhydride und Ester von Polyolen wie Glucosepentaacetat.
d2) **Vergrauungsinhibitoren** haben die Aufgabe, den von der Faser abgelösten Schmutz in der Flotte suspendiert zu halten und so das Vergrauen zu verhindern. Hierzu sind wasserlösliche Kolloide meist organischer Natur geeignet, wie beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche saure Gruppen enthaltende Polyamide sind für diesen Zweck geeignet. Weiterhin lassen sich lösliche Stärkepräparate und andere als die oben genannten Stärkeprodukte verwenden, zum Beispiel abgebaute Stärke, Aldehydstärken usw. Auch Polyvinylpyrrolidon (PVP) ist brauchbar.
d3) Als **Schaumregulatoren** kommen Kombination geeigneter Tensidtypen in Betracht; eine Verringerung läßt sich ebenfalls durch Zusätze nichttensidartiger organischer Substanzen erreichen. Ein verringertes Schäumvermögen, das beim Arbeiten in Maschinen erwünscht ist, erreicht man vielfach durch Kombination verschiedener Tensidtypen, zum Beispiel von Sulfaten und/oder Sulfonaten mit nichtionischen Tensiden und/oder mit Seifen. Bei Seifen steigt die schaumdämpfende Wirkung mit dem Sättigungsgrad und der C-Zahl des Fettsäurerestes an. Als schauminhibierende Seifen eignen sich daher solche Seifen natürlicher und synthetischer Herkunft, die einen hohen Anteil an C₁₈₋₂₄-Fettsäuren aufweisen. Geeignete nichttensidartige Schauminhibitoren sind Organopolysiloxane und deren Gemische von mikrofeiner, gegebenenfalls silanierter Kieselsäure, Paraffine, Wachse, Mikrokristallinwachse und deren Gemische mit silanierter Kieselsäure. Auch von C₁₂₋₂₀-Alkylaminen und C₂₋₆-Dicarbonsäuren abgeleitete Bisacylamide sind brauchbar. Mit Vorteil werden auch Gemische verschiedener Schaumregulatoren verwendet, zum Beispiel solche aus Siliconen und Paraffinen oder Wachsen. Vorzugsweise sind die Schaumregulatoren bzw. -inhibitoren an eine granulare in Wasser lösliche beziehungsweise dispergierbare Trägersubstanz gebunden.
d4) Als **optische Aufheller** können Derivate der Diaminostilbendisulfonsäure beziehungsweise deren Alkalimetallsalze vorliegen. Geeignet sind zum Beispiel Salze 4,4'-Bis-(2-anilino- 4-morpholino-1,3,5-triazin-6yl-amino)-stilben-2,2'-disulfonsäure oder gleichartig aufgebaute Verbindungen, die anstelle der Morpholinogruppe eine Diethanolamingruppe, eine Methylaminogruppe, eine Anilinogruppe oder eine 2-Methoxyethylaminogruppe tragen. Weiterhin können Aufheller vom Typ des substituierten 4,4'-Distyryl-di-phenyls anwesend sein; zum Beispiel die Verbindung 4,4'-Bis(4-chlor-3-sulfostyryl)-diphenyl. Auch Gemische der vorgenannten Aufheller können verwendet werden.
d5) Nach einer weiteren bevorzugten Ausführungsform der Erfindung werden einheitlich weiße Produkte erhalten, wenn die Mittel außer den üblichen optischen Aufhellern auch geringe Mengen eines **blauen Farbstoffes** enthält. Ein besonders bevorzugter Farbstoff ist Tinolux^{(R)} (Produktname der Ciba-Geigy).
e) Zur Erhöhung der raschen Auflösung an sich schwerlöslicher Komponenten, zum Beispiel entsprechender Aniontenside wie FAS, auch bei Raumtemperatur oder nur mäßig erhöhten Temperaturen kann die Mitverwendung sogenannter **Strukturbrecher** wichtig sein, die häufig schon in sehr geringen Mengen - bezogen auf Aniontensid - hochwirksam sind.
e1) Als Strukturbrecher eignen sich eine Reihe sowohl fester als auch flüssiger Substanzen, die hydrophil, wasserlöslich oder in Wasser dispergierbar sind. Geeignet sind beispielsweise **niedere Polyalkylenglykole**, die sich von geradkettigen oder verzweigtkettigen Glykolen mit 2 bis 6 Kohlenstoffatomen ableiten, vorzugsweise Polyethylenglycol oder Polypropylengly-col, und eine relative Molekülmasse zwischen 200 und 12.000 aufweisen. Insbesondere sind Polyethylenglycole mit einer relativen Molekülmasse zwischen 200 und 4.000 bevorzugt, wobei die flüssigen Polyethylenglycole mit einer relativen Molekülmasse bis 2.000 und insbesondere zwischen 200 und 600 besonders vorteilhafte Eigenschaften aufweisen.
e2) Ebenso sind die Sulfate und insbesondere die Disulfate von niederen Polyalkylenglycolen und zwar insbesondere des Polyethylenglycols und des 1,2-Propylenglycols geeignet. Besonders bevorzugt sind dabei die Sulfate und/ oder Disulfate, die sich von Polyethylenglycolen und Polypropylenglycolen mit einer relativen Molekülmasse zwischen 600 und 6.000 und insbesondere zwischen 1.000 und 4.000 ableiten. Die Disulfate stammen dabei in der Regel von Polyglycolethern, wie sie - bewirkt durch geringe Wasserspuren - bei der Oxalkylierung von alkoholischen Komponenten entstehen können, ab.
e3) Eine weitere Gruppe der geeigneten Strukturbrecher besteht aus den wasserlöslichen Salzen von Mono- und/oder Disulfosuccinaten der niederen Polyalkylenglycole. Besondere Bedeutung besitzen dabei wiederum die entsprechenden Polyethylenglycol- und Polypropylenglycol-Verbindungen, wobei Sulfosuccinate und Disulfosuccinate von Polyglycolethern mit einer relativen Molekülmasse zwischen 600 und 6.000, insbesondere zwischen 1.000 und 4.000, besonders bevorzugt sind.
   Für die Verwendung der anionisch modifizierten Polyalkylenglycole als Strukturbrecher kommen beliehige Salze, vorzugsweise jedoch die Alkalimetallsalze, insbesondere die Natrium- und Kalium-Salze, sowie Ammoniumsalze und/ oder Salze von organischen Aminen, beispielsweise von Triethanolamin, in Betracht. Die für die praktische Anwendung wichtigsten Salze sind die Natriumsalze der Sulfate, Disulfate, Sulfosuccinate und Disulfosuccinate von Polyethylenglycol und Polypropylenglycol.
   Vorzugsweise werden auch Mischungen der Polyalkylenglycole und ihrer anionisch modifizierten Derivate in einem beliebigen Mischungsverhältnis eingesetzt. Insbesondere ist dabei eine Mischung aus Polyalkylenglycol und den Sulfosuccinaten und/oder Disulfosuccinaten der Polyalkylenglycole bevorzugt. Geeignet ist aber auch eine Mischung aus Polyalkylenglycol und den entsprechenden Sulfaten und/oder Disulfaten und eine Mischung aus Polyalkylenglycol und den entsprechenden Sulfaten und/oder Disulfaten sowie den entsprechenden Sulfosuccinaten und/ oder Sulfodisuccinaten.
e4) Weiterhin sind im Sinne dieser Erfindung geeignete und bevorzugt eingesetzte Strukturbrecher die **Anlagerungsprodukte von etwa 20 bis etwa 80 Mol Ethylenoxid an 1 Mol eines aliphatischen Alkohols** mit im wesentlichen 8 bis 20 Kohlenstoffatomen, die seit langem bekannte Inhaltsstoffe von Wasch- und Reinigungsmitteln darstellen. Besonders wichtig sind die Anlagerungsprodukte von 20 bis 60 Mol und insbesondere 25 bis 45 Mol Ethylenoxid an primäre Alkohole, wie zum Beispiel Kokosfettalkohol oder Talgfettalkohol, an Oleylalkohol, an Oxoalkohole, oder an sekundäre Alkohole mit 8 bis 18 und vorzugsweise 12 bis 18 Kohlenstoffatomen. Beispiele für besonders bevorzugte Strukturbrecher aus der Gruppe der hochethoxylierten Alkohole sind Talgfettalkohol mit 30 EO und Talgfettalkohol mit 40 EO. Ebenso ist es bevorzugt, Mischungen einzusetzen, die hochethoxylierte Alkohole enthalten, beispielsweise Mischungen aus Talgfettalkohol mit 40 EO und Wasser oder aus Talgfettalkohol mit 40 EO und Polyethylenglykol mit einer relativen Molekülmasse zwischen 200 und 2.000.
e5) Weitere geeignete Strukturbrecher sind **ethoxylierte, vicinale innenständige Alkmdiole oder 1,2-Alkandiole** mit einer Kohlenstoffkette mit 8 bis 18 Kohlenstoffatomen und 4 bis 15 Mol Ethylenoxid pro Mol Diol. Dabei ist es möglich, daß nur eine der beiden OH-Gruppen oder beide OH-Gruppen des Alkandiols ethoxyliert sind.
e6) Weiterhin sind als Strukturbrecher modifizierte nichtionische Tenside mit einer endständigen Säuregruppe geeignet. Hierbei handelt es sich um nichtionische Tenside, insbesondere um Fettalkohole, bei denen eine OH-Gruppe in eine Gruppe mit einer Carboxylgruppe umgewandelt wurde. Zu den nichtionischen Tensiden mit endständiger Säuregruppe gehören somit Ester oder Teilester eines nichtionischen Tensids mit einer Polycarbonsäure oder einem Polycarbonsäureanhydrid. Beispiele für säure- terminierte nichtionische Tenside sind die bekannten **Polyethercarbonsäuren** und Ester beziehungsweise Halbester von C₈₋₁₈-Alkoholen mit Bernsteinsäureanhydrid, Maleinsäureanhydrid, Maleinsäure oder Citronensäure.
e7) Eine weitere Gruppe geeigneter Strukturbrecher besteht aus **Alkylenglykol-nonoalkylethern** der allgemeinen Formel **(VI)**,

   **R**^{**4**}**O(CH**_{**2**}**CH**_{**2**}**O)**_{**n**}**H (VI)**

   in der R⁴ einen Rest mit 2 bis 6 Kohlenstoffatomen und n eine Zahl von 1 bis 8 darstellen. Beispiele für diese Gruppe der Zusatzstoffe sind Ethylenglykolmonoethylether und Diethylenglykolmonobutylether.

Die folgenden Beispiele sollen den Gegenstand der Erfindung näher erläutern, ohne ihn darauf einzuschränken.

### Beispiele

### Beispiel 1

In einem Versuchssprühturm im Technikumsmaßstab vom Typ "Minor Produktion" der Firma Niro-Atomizer wurde ein Slurry des Natriumsalzes eines C_{16/18}-Fettalkoholsulfats unter Zusatz von Natriumcarbonat zu einem rieselfähigen Tensidpulver umgewandelt. Das Mischungsverhältnis zwischen dem Aniontensid und Natriumcarbonat betrug 4 : 1, bezogen auf Trockensubstanz.

Der eingesetzte wäßrige Slurry des Fettalkoholsulfats ist eine weiße bis schwach gelbe, feste Paste mit den Kenndaten:

| | |
|---|---|
| Waschaktive Substanz nach Epton | 54 - 58 Gew.-% |
| Fettalkoholsulfat | 53 - 55 Gew.-% |
| Unsulfiertes | 1 - 3 Gew.-% |
| Gehalt an NaCl | <= 1 Gew.-% |
| Gehalt an Na₂SO₄ | <= 2 Gew.-% |
| pH-Wert (3%ige wäßrige Zubereitung) | 10 - 11,5 |

Nach Zugabe der wäßrigen Sodalösung stellte sich ein Trokkensubstanzgehalt des Slurries von 47,7 Gew.-% ein.

Zur Heißdampftrocknung wurden die folgenden Betriebsparameter eingestellt:

| | |
|---|---|
| Dampfeintrittstemperatur | 250 °C |
| Dampfaustrittstemperatur | 175 - 180 °C |
| Turmunterdruck | 16 mbar |
| Feedpumpendruck | 5,5 bar |
| Feedtemperatur | 80 °C |
| Feedmenge | 12 kg/h |
| Dampfmenge | ca. 350 m³/h |
| Treibgas der Zweistoffdüse | |
| - Menge | 3,3 m³/h |
| Druck | 0,2 bar |

Das erhaltene Produkt hatte einen Trockensubstanzgehalt von 99,2 Gew.-%. Das Schüttgewicht betrug 293 g/l. Eine 90%ige Löslichkeit in Wasser bei 20°C wurde bei 40 Sekunden erreicht. Das so gewonnene Trägerbead wurde nachfolgend mit flüssigem Niotensid beaufschlagt.

Die Zugabe des flüssigen Niotensids zu dem Aniontensidpulver erfolgte in einem Mischer der Firma Lödige. Das Niotensid war eine 4 : 1 Mischung aus einem C_{12/14}-Fettalkohol mit 3 EO und einem C_{12/14}-Fettalkohol mit 5 EO.

### Die folgenden Betriebsparameter wurden eingestellt:

| | |
|---|---|
| Mischerdrehzahl | 385 U/min |
| Dosiergeschwindigkeit des Niotensides | 2,3 g/min |
| Nachmischzeit | 1 min |
| Temperatur des Tensidpulvers | 25 °C |
| Temperatur des zudosierten Niotensides | 54 °Cm |

Es wurden 14 Gew.-% Niotensid, bezogen auf die Masse des Aniontensidpulvers, zugegeben. Das Schüttgewicht des Tensidpulvers betrug nach Beaufschlagung mit Niotensid 380 g/l. Die 90%ige Löslichkeit in Wasser bei 20°C lag bei 20 Sekunden.

### Beispiel 2

Es wurde wie in Beispiel 1 gearbeitet. Aufgetrocknet wurde ein wäßriger Slurry mit 53,3 Gew.-% Feststoffgehalt, der sich zusammensetzte aus dem in Beispiel 1 genannten Natriumsalz eines C_{16/18}-Fettalkoholsulfates und einem feinteiligen Natriumaluminiumsilikat (Zeolith NaA in Waschmittelqualität) in 48%iger Suspension, die mit 1,5 Gew.-% Talgalkoholpolyglycolether stabilisiert war. Das Mischungsverhältnis (Trockengewicht) Aniontensid zu Silicat betrug 2 : 1. Das Trockenprodukt hatte ein Schüttgewicht von 316 g/l und eine Löslichkeit von 10 Sekunden. Anschließend wurde das Aniontensid enthaltende Pulver mit 10 Gew.-% Niotensid beladen. Als Niotensid wurde ein Gemisch aus 19 Teilen des in Beispiel 1 angegebenen C_{12/14}-Fettalkoholes mit 3 EO sowie C_{12/14}-Fettalkohol mit 5 EO und einem Teil eines Talgfettalkoholes mit ca. 40 Mol EO eingesetzt. Der Erstarrungsbereich des Talgfettalkoholes liegt zwischen 42 und 47°C. Das Niotensidgemisch wurde in flüssiger Form bei 54°C dem pulverförmigen Trockenprodukt aus der Heißdampftrocknung zugegeben. Das Schüttgewicht des imprägnierten Materials beträgt 492 g/l. Die Löslichkeit wurde mit weniger als 10 Sekunden bestimmt.

### Beispiel 3

Es wurde wie in Beispielen 1 und 2 gearbeitet. Aufgetrocknet wurde in der Phase des überhitzten Wasserdampfes ein Slurry mit 24,1% Feststoffgehalt. Die Feststoffbestandteile der Ausgangsmischung waren das in Beispiel 1 genannte Natriumsalz eines C_{16/18}-Fettalkoholsulfates, das Di-Natriumsalz einer C_{16/18}-alpha-Sulfofettsäure und Natriumcarbonat im Mischungsverhältnis 4 : 1 : 1. Das getrocknete Trägerbead-Pulver hatte ein Schüttgewicht von 220 g/l und eine Löslichkeit (90%) von 20 Sekunden. Das getrocknete Material wurde mit 14 Gew.-% Niotensid beladen. Als Niotensid wurde eine 4 : 1 Mischung aus einem C_{12/14}-Fettalkohol mit 3 EO und einem C_{12/14}-Fettalkohol mit 5 EO eingesetzt. Nach der Niotensidbeladung stellte sich ein Schüttgewicht von 310 g/l ein. Die Löslichkeit (90%) betrug 16 Sekunden.

### Beispiel 4

verschiedene Gemische aus aniontensidischen Komponenten und wasserlöslichen anorganischen Hilfsstoffen werden in wäßriger Zubereitung gemäß den Angaben des Beispiels 1 über eine 2-Stoffdüse (Treibgas Stickstoff) versprüht und im Gegenstrom mit überhitztem Wasserdampf getrocknet.

In der nachfolgenden tabellarischen Zusammenstellung sind die eingesetzten Stoffgemische, die Mischungsverhältnisse der Komponenten in dem jeweiligen Stoffgemisch - bezogen auf Trockensubstanz -, die im Trockenprodukt erhaltenen Schüttgewichte in g/l, die Restfeuchte in Gew.-% und die Löslichkeit (90%) unter Standardbedingungen in Wasser (20°C) zusammengefaßt. Dabei gilt im einzelnen:
Sulfopon T55 (Handelsbezeichnung der Anmelderin):
Aniontensid auf Fettalkoholsulfatbasis
Disalz: Na-Disalz eines C_{16/18}-alpha-Sulfofettsäuregemisches
Dehydol TA40: Talgalkohol-Ethoxylat (im Mittel 40 EO)
Wasserglas A: Wasserlösliches Natriumsilicat in Waschmittelqualität

Die nachfolgende Tabelle erfaßt die angegebenen Daten für die zum porösen Trägerbead aufgetrockneten Stoffgemische der angegebenen Art. Auffällig sind die durchweg vergleichsweise hohen Lösungsgeschwindigkeiten, die sich in den Zahlenwerten zur Löslichkeit (90%) ausdrücken, obwohl in allen Fällen beträchtliche Mengen der in Kaltwasser an sich schwer löslichen aniontensidischen Komponenten im jeweiligen Stoffgemisch vorliegen.

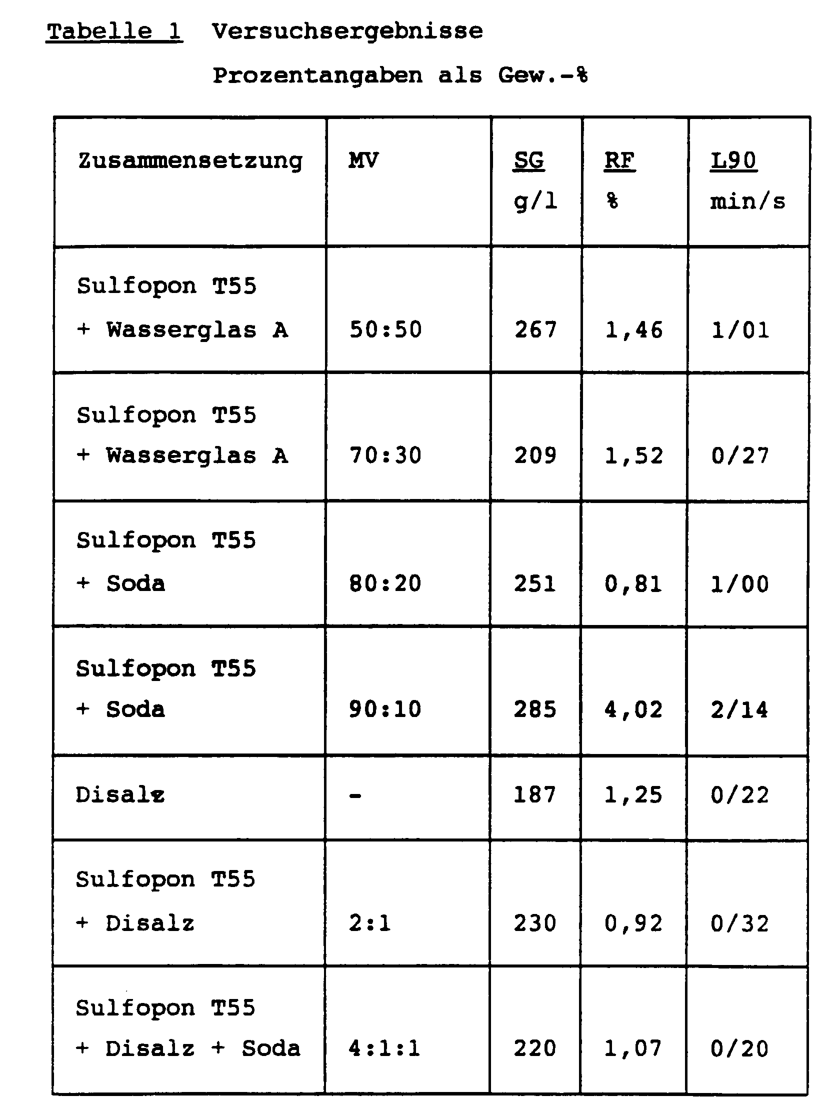

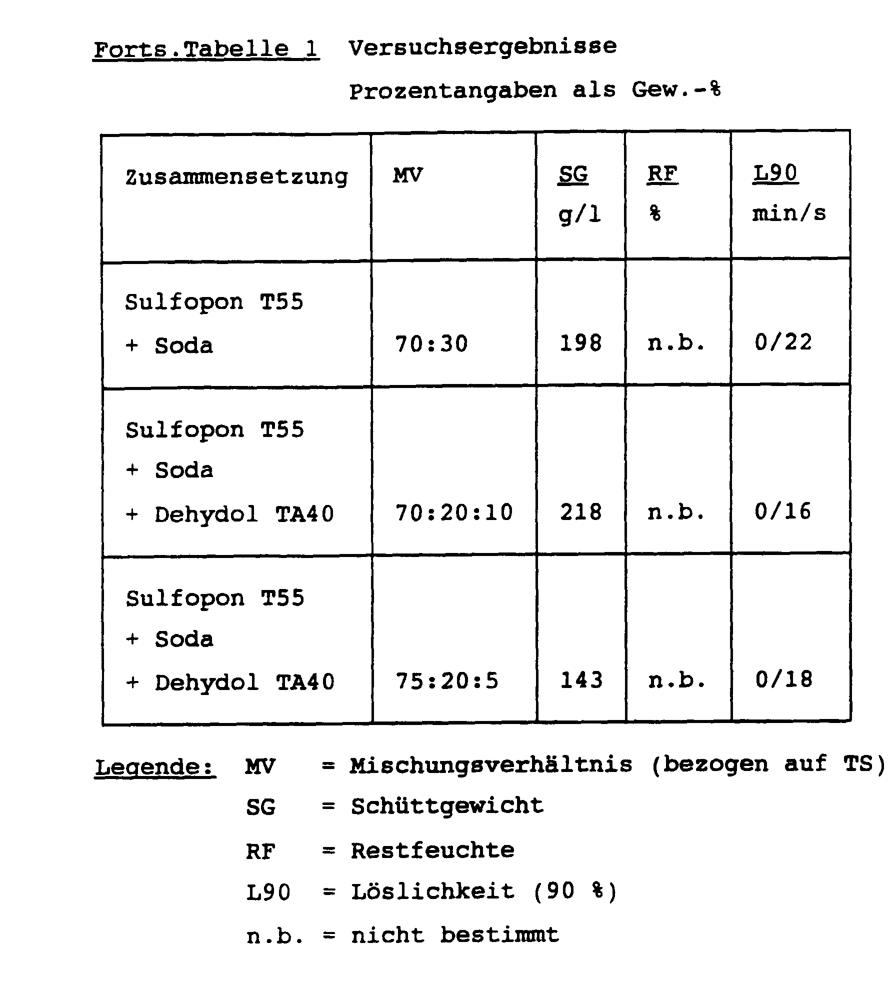

### Beispiel 5

Die Stoffmischung für die Gewinnung eines Turmpulvers zur Herstellung eines Textilwaschmittels (Handelsprodukt "Persil Color") der Anmelderin wird in der Vorrichtung des Beispiels 1 der Trocknung mit überhitztem Wasserdampf zum rieselfähigen Turmpulver unterworfen. Dabei werden durch Variation der Arbeitsbedingungen unterschiedliche Schüttgewichte im nicht beladenen aufgetrockneten Turmpulver eingestellt - in der nachfolgenden tabellarischen Zusammenfassung als "Schüttgewicht-1" bezeichnet.

Die dampfgetrockneten Turmpulver werden nachfolgend mit unterschiedlichen Mengen eines Niotensids auf Fettalkoholethoxylatbasis (Handelsprodukt "Dehydol LST 80/20" der Anmelderin) im Lödige-Mischer beaufschlagt. Dabei werden einerseits unterschiedliche Niotensidmengen zum anderen Variationen in der Temperatur der getrockneten Turmpulver und/oder der Temperatur des Niotensids beim Auftrag auf das Trägerbead (Turmpulver) gewählt.

Die nachfolgende tabellarische Zusammenstellung gibt Einzelheiten zu den Arbeitsbedingungen und gibt die im beaufschlagten Fertigprodukt erhaltenen Schüttgewichte (als "Schüttgewicht-2" bezeichnet) sowie die Löslichkeit (90%) in Wasser bei 20°C in Sekunden an.

**Tabelle 2:**

| Versuchsergebnisse Prozentangaben als Gew.-% | | | | | |
|---|---|---|---|---|---|
| SG1 g/l | NM % | TP °C | TT °C | SG2 g/l | L90 s |
| 480 | 20,0 | 26 | 26 | 480 | 12 |
| 480 | 10,0 | 26 | 26 | 560 | < 10 |
| 480 | 10,0 | 26 | 43 | 580 | 6 |
| 480 | 15,0 | 26 | 40 | 520 | < 10 |
| 480 | 12,0 | 26 | 46 | 560 | < 10 |
| 409 | 10,0 | 26 | 35 | 460 | 6 |
| 409 | 11,5 | 26 | 39 | 460 | 16 |
| 570 | 11,5 | 42 | 50 | 591 | 8 |
| 570 | 15,0 | 41 | 50 | 598 | 8 |
| 570 | 20,0 | 40 | 51 | 569 | 13 |
| 570 | 11,5 | 58 | 42 | 610 | 6 |
| 570 | 15,0 | 61 | 50 | 630 | 10 |
| 570 | 20,0 | 60 | 46 | 590 | 9 |
| Legende: SG1 = Schüttgewicht 1 NM = Niotensidmenge TP = TP-Temperatur TT = Tensidtemperatur SG2 = Schüttgewicht-2 L90 = Löslichkeit (90%) | | | | | |

### Beispiel 6

Das gemäß Beispiel 5 heißdampfgetrocknete Turmpulver wird in einer Reihe weiterer Versuche mit einer 50%igen wäßrigen Zubereitung eines Niotensids auf Basis Alkylglykosid (Handelsprodukt "APG 600" der Anmelderin) in einem Lödige-Mischer beaufschlagt.

Das Ausgangsschüttgewicht des hier eingesetzten Textilwaschmittel-Turmpulvers beträgt im aufgetrockneten Zustand 570 g/l. Die nachfolgende Tabelle 3 faßt die jeweils aufgetragenen Niotensidmengen, die im Lödige-Mischer vorgegebene Temperatur des Turmpulvers, das Schüttgewicht des beladenen Turmpulvers (Schüttgewicht-2), die Löslichkeitswerte in Sekunden (90%) sowie die bestimmten Restfeuchten zusammen. Die Tensidtemperatur beim Auftrag im Lödige-Mischer lag in allen Fällen bei 40°C.

**Tabelle 3:**

| Versuchsergebnisse Prozentangaben als Gew.-% | | | | |
|---|---|---|---|---|
| NM % | TP °C | SG2 g/l | L90 s | RF % |
| - | - | - | 4 | 7,26 |
| 11,5 | 56 | 560 | 22 | 5,87 |
| 15,0 | 48 | 535 | 28 | 7,77 |
| 20,0 | 56 | 610 | 40 | 7,75 |
| 18,0 | 60 | 560 | 30 | 6,84 |

### Beispiel 7

Im Lödige-Mischer wird unter Einsatz des Niotensids auf APG-Basis gemäß Beispiel 6 eine Reihe von heißdampfgetrockneten Trägerbeads beladen, die durch Heißdampftrocknung vorgegebener Stoffgemische auf Basis ausgewählter Aniontenside (Sulfopon T55 und "Disalz" der zuvor angegebenen Art) gegebenenfalls in Abmischung mit Soda, erfindungsgemäß in einer ersten Verfahrensstufe hergestellt worden sind.

Die eingesetzten Materialien - in der nachfolgenden Tabelle 4 als "Turmpulver" bezeichnet -, die Schüttgewichte der eingesetzten Materialien (Schüttgewicht-1), die jeweils in der zweiten Verfahrensstufe aufgegebene Menge der 50%igen tensidischen APG 600-Komponente, die Arbeitsbedingungen, das Schüttgewicht der beladenen Trägerbeads (Schüttgewicht-2) sowie die bestimmten Werte zur Löslichkeit (90%) und zur Restfeuchte sind in der nachfolgenden Tabelle 4 zusammengefaßt.

**Tabelle 4:**

| Versuchsergebnisse Prozentangaben als Gew.-% | | | | | | | |
|---|---|---|---|---|---|---|---|
| Turmpulver | SG1 g/l | NM % | TP °C | TT °C | SG2 g/l | L90 m/s | RF % |
| Sulfopon T55 + Soda (80:20) | 237 251 | - - | | | | 1/56 1/00 | 1,13 0,81 |
| Sulfopon T55 + Soda (80:20) | 237 | 11,5 | 70 | 50 | 500 | -/50 | 2,46 |
| Sulfopon T55 + Soda (80:20) | 237 | 6,7 | 57 | 54 | 400 | -/40 | 2,49 |
| Sulfopon T55 + Disalz (2:1) | 230 | - | | | | -/32 | 0,92 |
| Sulfopon T55 + Disalz (2:1) | 230 | 12,0 | 26 | 45 | 330 | 1/20 | 2,98 |
| Sulfopon T55 + Disalz + Soda (4:1:1) | 220 | - | | | | -/20 | 1,07 |
| Sulfopon T55 + Disalz + Soda (4:1:1) | 220 | 12,0 | 21 | 50 | 350 | -/40 | 3,20 |

### Beispiel 8

Aniontensid (Sulfopon T55) in Abmischung mit untergeordneten Mengen Soda - Mischungsverhältnisse 80 : 20 und 70 : 30 - werden in wäßriger Zubereitung der erfindungsgemäßen Sprühtrocknung mit überhitztem Wasserdampf im Sinne des Beispiels 1 unterworfen. In entsprechender Weise wird unter Mitverwendung einer untergeordneten Mengen an Strukturbrecher (Dehydol TA 40) zusammengesetztes Tensid/Soda-Gemisch zum heißdampfgetrockneten Trägerbead aufgearbeitet - Mischungsverhältnisse Solfopon T55/Soda/Strukturbrecher von 75/20/5.

Die Schüttgewichte und die Löslichkeiten (90%) dieser nicht beladenen Trägerbead-Materialien werden bestimmt.

Nachfolgend werden in einem Lödige-Mischer Proben der Träger-beads mit einem Niotensid-PEG 400-Gemisch beaufschlagt und imprägniert. Als Niotensidgemisch wird eine Mischung von 3 Gewichtsteilen Fettalkoholethoxylat (Dehydol LST 80/20) und einem Teil PEG 400 verwendet.

Bestimmt werden an den beladenen Produkten die eingestellten Schüttgewichte und die Löslichkeit in Wasser bei 20°C (90%).

Die Arbeitsbedingungen für die jeweilige Beladungsstufe der Trägerbeads und die ermittelten Produktdaten sind in der nachfolgenden Tabelle 5 zusammengefaßt.

**Tabelle 5:**

| Versuchsergebnisse Prozentangaben als Gew.-% | | | | | | |
|---|---|---|---|---|---|---|
| Turmpulver | SG1 g/l | NM % | TP °C | TT °C | SG2 g/l | L90 m/s |
| Sulfopon T55 + Soda (80:20) | 224 | | | | | -/40 |
| Sulfopon T55 + Soda (80:20) | 224 | 12,0 | 21 | 50 | 340 | -/36 |
| Sulfopon T55 + Soda (70:30) | 193 | | | | | -/22 |
| Sulfopon T55 + Soda (70:30) | 193 | 13,0 | 21 | 48 | 330 | -/32 |
| Sulfopon T55 + Soda + Dehydol TA40 (75:20:5) | 143 | | | | | -/18 |
| Sulfopon T55 + Soda + TA40 (75:20:5) | 143 | 12,0 | 21 | 53 | 350 | 1/46 |

In einer Reihe weiterer Vergleichsversuche wurde ein Niotensidgemisch aus den gleichen Komponenten jedoch unter Einsatz sehr viel weniger der PEG 400-Komponente verwendet. Das Mischungsverhältnis des Niotensids (Dehydol LST 80/20) zum PEG 400 beträgt hier 19 : 1. Die entsprechend erhaltenen Werte sind in der nachfolgenden Tabelle 6 zusammengestellt.

**Tabelle 6:**

| Versuchsergebnisse Prozentangaben als Gew.-% | | | | | | |
|---|---|---|---|---|---|---|
| Turmpulver | SG1 g/l | NM % | TP °C | TT °C | SG2 g/l | L90 m/s |
| Sulfopon T55 + Soda (80:20) | 224 | | | | | -/40 |
| Sulfopon T55 + Soda (80:20) | 224 | 17,0 | 25 | 45 | 380 | -/20 |
| Sulfopon T55 + Soda + Dehydol TA40 (75:20:5) | 143 | | | | | -/18 |
| T55+Soda + TA40 (75:20:5) | 143 | 14,0 | 25 | 52 | 315 | -/24 |

Auffallend ist die deutliche Erhöhung der Auf lösungsgeschwindigkeit in wäßriger Phase im Falle des als 3-Stoffgemisches eingesetzten Trägerbeads.

### Beispiel 9

Eine mit Beispiel 8 vergleichbare Versuchsreihe verwendet als Hilfsstoff (Strukturbrecher) zur Verbesserung der Löslichkeit ein hochethoxyliertes Fettalkohol-Niotensid (Dehydol TA 40), sowohl bei der Herstellung des heißdampfgetrockneten unbeladenen Trägerbeads als auch bei der Zusammensetzung der in zweiter Stufe aufzubringenden niotensidischen Beladung.

Eine erste Versuchsreihe (Tabelle 7) verwendet dabei in der als Flüssigphase eingesetzten Niotensidmischung vergleichsweise große Mengen des Strukturbrechers (Gewichtsverhältnis Dehydol LST 80/20 : Dehydol TA 40 von 3 : 1), in der zweiten Versuchsreihe - Tabelle 8 - wird die Menge des Strukturbrechers in der Beladungsflüssigkeit wiederum stark abgesenkt - Mischungsverhältnis Niotensid (Dehydol LST 80/20) : Strukturbrecher (Dehydol TA 40) von 19 : 1. Die Arbeitsbedingungen und die festgestellten Meßwerte zum Schüttgewicht der getrockneten unbeladenen Trägerbeads sowie der beladenen Tensidmischungen sowie die Löslichkeiten (90%) in Wasser von 20°C sind in den nachfolgenden Tabellen 7 und 8 zusammengefaßt.

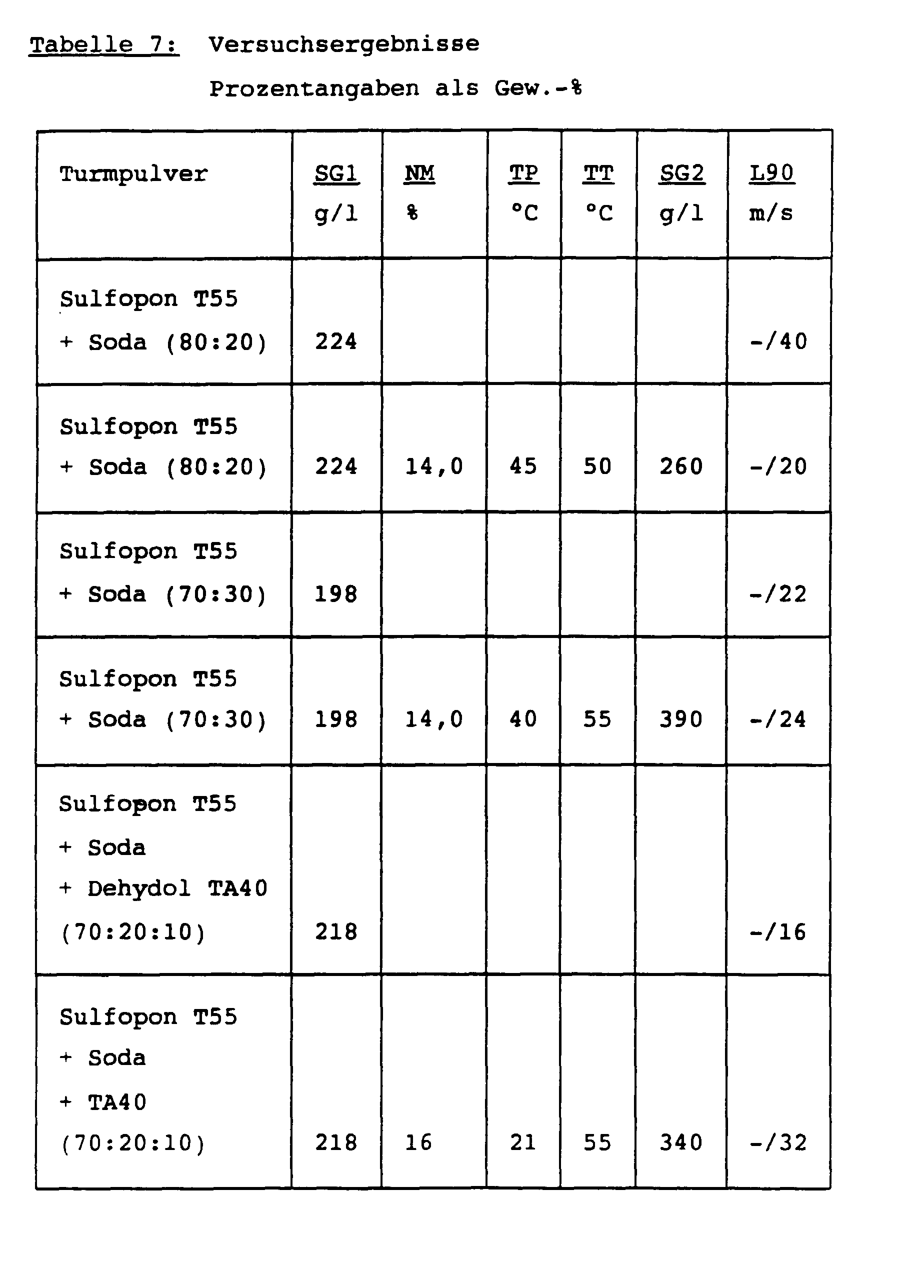

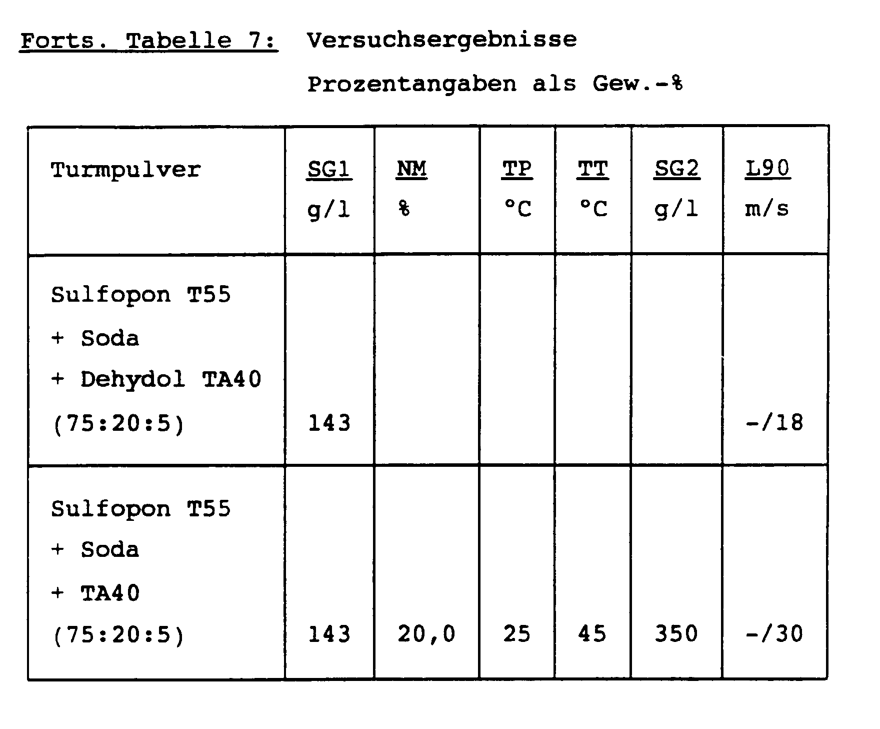

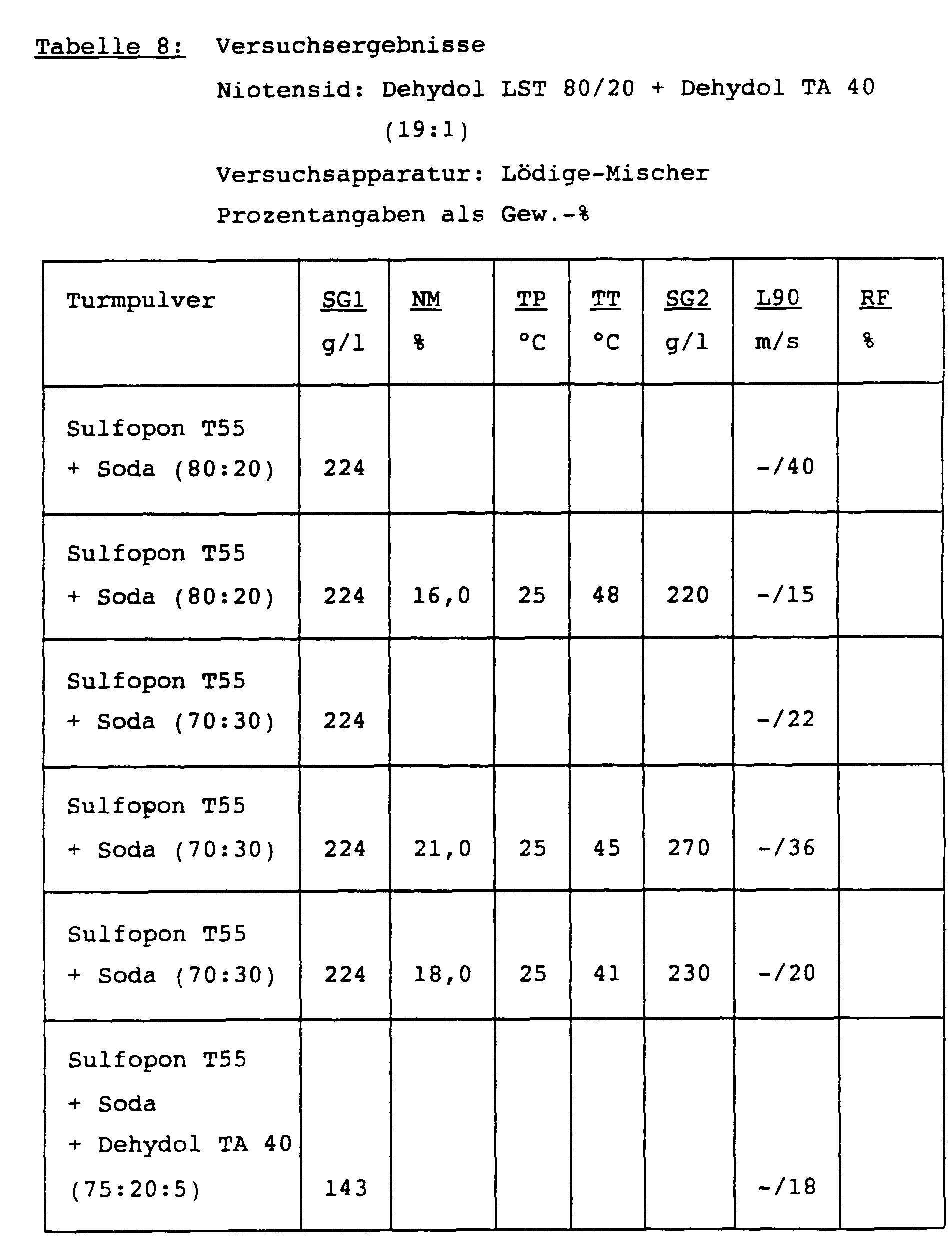

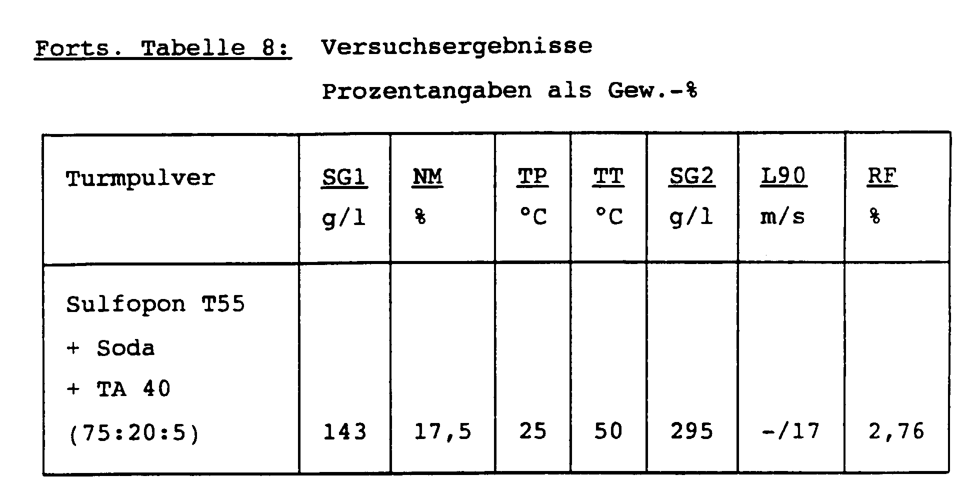

Auch hier ist tendenziell die verbesserte Löslichkeit bei Reduzierung der Menge des als Lösungshilfsmittel eingesetzten Strukturbrechers festzustellen.

### Beispiel 10

In einem Versuchssprühturm im Technikumsmaßstab vom Typ "Minor Produktion" der Firma Niro-Atomizer wurde ein Slurry des Natriumsalzes eines C_{16/18}-Fettalkoholsulfats unter Zusatz von Natriumcarbonat zu einem rieselfähigen Tensidpulver umgewandelt. Das Mischungsverhältnis zwischen dem Aniontensid und Natriumcarbonat betrug 4 : 1, bzogen auf Trockensubstanz.

Der eingesetzte wäßrige Slurry des Fettalkoholsulfats ist eine weiße bis schwach gelbe, feste Paste mit den Kenndaten:

| | |
|---|---|
| Waschaktive Substanzen nach Epton | 54 - 58 Gew.-% |
| Fettalkoholsulfat | 53 - 55 Gew.-% |
| Unsulfiertes | 1 - 3 Gew.-% |
| Gehalt an NaCl | < = 1 Gew.-% |
| Gehalt an Na₂SO₄ | < = 2 Gew.-% |
| pH-Wert (3%ige wäßrige Zubereitung) | 10 - 11,5 |

### Zur Heißdampftrocknung wurden die folgenden Betriebsparameter eingestellt:

| | |
|---|---|
| Dampfeintrittstemperatur | 250 °C |
| Dampfaustrittstemperatur | 175 - 180 °C |
| Turmunterdruck | 16 mbar |
| Feedpumpendruck | 5,5 bar |
| Feedtemperatur | 80 °C |
| Feedmenge | 12 kg/h |
| Dampfmenge | ca. 350 m³/h |
| Treibgas der Zweistoffdüse | |
| - Menge | 3,3 m³/h |
| Druck | 0,2 bar |

Das erhaltene Produkt hatte eine Trockensubstanzgehalt von 99,2 Gew.-%. Das Schüttgewicht betrug 293 g/l. Eine 90%ige Löslichkeit in Wasser bei 20 °C wurde bei 40 Sekunden erreicht. Das so gewonnene Trägerbad wurde nachfolgend mit Wasser und/oder einem Gemisch aus Niotensid und Polyethylenglycol (mittlere Molmasse 400) beaufschlagt. Das Niotensid war eine 4 : 1 Mischung aus einem C_{12/14}-Fettalkohol mit 3 EO und einem C_{12/14}-Fettalkohol mit 5 EO (Dehydol LST 80/20^{R}, Hersteller Henkel KGaA).

Die Zugabe der oben aufgeführten flüssigen Komponenten erfolgte wahlweise in einem Mischer der Firma Lödige oder in einem Wirbelschicht-Sprühgranulator des Typs STREA-1 der Firma Arromatic.

### Die folgenden Betriebsparameter wurden eingestellt:

### 1) Mischer:

| | |
|---|---|
| Mischerdrehzahl | 385 U/min |
| Menge an dampfgetrocknetem Tensidpulver | 5 kg |
| Dosiergeschwindigkeit | 2,3 g/min |
| Nachmischzeit | 1 min |
| Temperatur des Tensidpulvers | 25 °C |
| Temperatur der zudosierten Flüssigkomponente | 25 °C |

### 2) Wirbelschicht:

| | |
|---|---|
| Luftmenge | 140 m³/h |
| Menge an dampfgetrocknetem Tensidpulver | 1 kg |
| Dosiergeschwindigkeit | 6 g/min |
| Temperatur der zudosierten Flüssigkomponente | 25 °C |

In der Tabelle 9 sind die Mengen an aufgesprühter Flüssigkomponente in Gwe.-% sowie die Löslichkeit (90%) im Wasser bei 20 °C und die entsprechenden Schüttgewichte zusammengefaßt.

**Tabelle 9:**

| Versuchsergebnisse (Prozentangaben als Gew.-%) | | | | | |
|---|---|---|---|---|---|
| | Flüssigkomponente | | | | |
| Wasser % | Niotenside+PEG 400 im Verhältnis 19:1 % | Mischer | Wirbel schicht | L 90 m/s | SG g/l |
| 10 | - | X | - | 1/- | 245 |
| 10 | - | - | X | -/50 | 261 |
| 20 | - | - | X | 1/- | 210 |
| 16 | 1 | X | - | -/40 | 260 |
| 6 | 2 | X | - | -/30 | 223 |
| 4 | 4 | X | - | -/28 | 221 |
| - | 6 | X | - | -/30 | 247 |

Das Vorgemisch aus dampfegetrocknetem Tensidpulver und Flüssigkomponente wurde anschließend in einem Extruder der Fa. Leistritz bzw. in einer Pelletpresse der Fa. Schlüter granuliert. Das Feinkorn (< 0,4 mm) und das Überkorn (> 1,25 mm) wurde abgesiebt. Die Gutkornfraktion mit Partikeldurchmessern zwischen 0,4 und 1,25 mm wie nachstehende Granulateigenschaften auf (Tabelle 10).

**Tabelle 10:**

| Flüssigkomponente | | | | | | |
|---|---|---|---|---|---|---|
| Wasser % | Niotenside + PEG 400 Verh. 19:1 % | Extruder % | Pellet-presse | L 90 m/s | SG g/l | RF % |
| 10 | - | - | X | 4/50 | 482 | 5,2 |
| 10 | - | X | - | 8/20 | 580 | 4,9 |
| 20 | - | X | - | 2/25 | 532 | 14,2 |
| 30 | - | X | - | 2/10 | 455 | 10,5 |
| 40 | - | X | - | 3/20 | 397 | 20,7 |
| 20 | 10 | - | X | 4/40 | 542 | 5,2 |
| 16 | 1 | - | X | 3/10 | 482 | 7,7 |
| 6 | 2 | - | X | 2/50 | 527 | 10,9 |
| 4 | 4 | - | X | 2/45 | 517 | 4,7 |
| - | 6 | - | X | 3/- | 480 | 7,3 |

Die tensidreichen Granulate sind staubfrei, geruchsneutral und besitzen eine gleichmäßige Kornverteilung. Das Schüttgewicht liegt bei ca. 500 g/l. Die Löslichkeiten variieren je nach Menge und Art der Benetzungsflüssigkeit zwischen 2 und 3 Minuten bei 20 °C. Bei Bedarf kann ein "Abpudern" mit Kalziumkarbonat (3 Gew.-%) die Granulate vor einem Zusammenkleben schützen. Die Zugabe des CaCO₃ erfolgte in einem Marumerizer^{R}.

## Patentansprüche

1. Für den Einsatz in Netz-, Wasch- und/oder Reinigungsmitteln geeignete Wertstoffe und Wertstoffgemische in Form eines schüttfähigen kornförmigen Gutes, das durch Beladen eines im unbeladenen Zustand eine poröse Grundstruktur aufweisenden Grundkorns (Trägerbead) mit einer Wertstoffe der angegebenen Art enthaltenden Zubereitung (Auftragsmasse) gewonnen wird, dadurch gekennzeichnet, daß das Trägerbead ein durch Sprüh- und/oder Wirbelschichttrocknung in überhitztem Wasserdampf gewonnenes Material ist, das im Temperaturbereich von 100 bis 110 °C als Feststoff vorliegt, dessen Plastizität und Oberflächenklebrigkeit derart eingeschränkt sind, daß substantielle Verklebungen der Teilchen miteinander und/oder Verklebungen deren offenporigen Innenstruktur auch unter den Bedingungen der Einwirkung des überhitzten Wasserdampfs ausscheiden.

2. Kornförmiges Gut nach Anspruch 1, dadurch gekennzeichnet, daß das Trägerbead wenigstens anteilsweise, vorzugsweise wenigstens überwiegend aus Wertstoffen für Netz-, Wasch- und/oder Reinigungsmittel gebildet und durch Trocknung einer fließfähigen, insbesondere wäßrigen Zubereitungen in überhitztem Wasserdampf hergestellt worden ist.

3. Kornförmiges Gut nach Anspruch 1, dadurch gekennzeichnet, daß das getrocknete Trägerbead die eingeschränkte Plastizität und Oberflächenklebrigkeit im Temperaturbereich bis etwa 120 °C aufweist.

4. Kornförmiges Gut nach Anspruch 1, dadurch gekennzeichnet, daß die Auftragsmasse zu einem wenigstens substantiellen Anteil in die poröse Innenstruktur des Trägerbeads eingetragen ist und diese Innenstruktur bevorzugt zu wenigstens 10 Vol.-%, zweckmäßig zu wenigstens 50 Vol.-% - bezogen auf zugängliches Innenvolumen des Trägerbeads - belegt.

5. Kornförmiges Gut nach Anspruch 1, dadurch gekennzeichnet, daß das zugängliche Innenvolumen des Trägerbeads praktisch vollständig mit Auftragsmasse gefüllt und darüber hinaus nur begrenzte Mengen an Auftragsmasse auf den Trägerbead-Außenflächen vorliegen, die bevorzugt höchstens etwa der Innenbefüllung entsprechen, insbesondere aber darunterliegen.

6. Kornförmiges Gut nach Anspruch 1, dadurch gekennzeichnet, daß insbesondere bei im Raumtemperatur-Bereich fließfähigen und/oder klebrigen Auftragsmassen keine substantiellen Mengen der Auftragsmasse im Korn-Außenbereich vorliegen.

7. Kornförmiges Gut nach Anspruch 1, dadurch gekennzeichnet, daß das Trägerbead unter Mitverwendung von Wertstoffen mit Tensidcharakter aufgebaut ist, die vorzugsweise wenigstens etwa 10 Gew.-%, insbesondere wenigstens etwa 35 Gew.-% des Trägerbeads ausmachen, dabei aber auch wenigstens etwa 50 Gew.-% - bezogen auf TrägerbeadGewicht - betragen können.

8. Kornförmiges Gut nach Anspruch 1, dadurch gekennzeichnet, daß das Trägerbead Aniontenside, gegebenenfalls in Abmischung mit wasserlöslichen und/oder feinteiligen wasserunlöslichen anorganischen und/oder organischen Hilfs- und/oder Wertstoffen, enthält, wobei Aniontenside oder Aniontensidmischungen bevorzugt sein können, die wenigstens anteilsweise im Temperaturbereich von etwa 100 bis 110 °C fest sind.

9. Kornförmiges Gut nach Anspruch 1, dadurch gekennzeichnet, daß das Trägerbead in Abmischung mit den tensidischen Verbindungen Hilfs- und/oder Wertstoffe enthält, die zur erforderlichen Absenkung der Oberflächenklebrigkeit und Plastizität des Mehrkomponentengemisches beitragen.

10. Kornförmiges Gut nach Anspruch 1, dadurch gekennzeichnet, daß das Trägerbead in seiner Grundstruktur Aniontenside aus den Klassen der Carboxylate, der Sulfonate, einschließlich der Estersulfonate, der Di-Salze und/oder bevorzugt Aniontenside aus der Klasse der wasch- und/oder reinigungsaktiven Sulfate enthält.

11. Kornförmiges Gut nach Anspruch 1, dadurch gekennzeichnet, daß das Trägerbead aus Gemischen von einem oder mehreren Tensiden, insbesondere Aniontensiden, und wasserlöslichen und/oder feinteiligen wasserunlöslichen anorganischen und/oder organischen Wertstoffen ohne Tensidcharakter aufgebaut ist, wobei als anorganische Mischungskomponenten insbesondere Alkalisierungsmittel wie lösliche Alkalisilikate (Wasserglas), Soda und/oder Alkalihydroxid, Builder- und/oder Co-Builderkomponenten wie Phosphate, feinteilige unlösliche Silicate, insbesondere Zeolith-Verbindungen wie Zeolith-NaA in Waschmittelqualität, oder Bentonite und/oder Kristallwasser-bindende Salze, wie Natriumsulfat, vorliegen.

12. Kornförmiges Gut nach Anspruch 1, dadurch gekennzeichnet, daß das Trägerbead in seiner Korngrundstruktur die anorganischen und/oder organischen Hilfsstoffe in Mengen nicht über etwa 60 Gew.-%, vorzugsweise im Bereich von 5 bis 50 Gew.-% und insbesondere in Mengen von 10 bis 30 Gew.-% - Gew.-% bezogen auf unbeladenes getrocknetes Trägerbead - enthält.

13. Kornförmiges Gut nach Anspruch 1, dadurch gekennzeichnet, daß das Trägerbead in seiner Korngrundstruktur die Aniontenside in Abmischung mit hinreichend temperaturstabilen sonstigen Wertstoffen des Bereichs der Netz-, Wasch- und/oder Reinigungsmittel, insbesondere aus den Klassen der Niotenside, der organischen Builder/Co-Builder, der Vergrauungs- und Verfärbungsinhibitoren, der Schaumregulatoren und/oder der optischen Aufheller enthält, wobei Abmischungen der Aniontenside mit Hilfsstoffen zur Verbesserung der Aniontensid-Auflösung in wäßrigen Phasen wie Dispergatoren, Hydrotrope, Strukturbrecher und/oder sonstigen Lösungsvermittler bevorzugt sein können.

14. Kornförmiges Gut nach Anspruch 1, dadurch gekennzeichnet, daß das zum schüttfähigen Gut getrocknete Trägerbead in wenigstens einer anschließenden Arbeitsstufe (2. Stufe) mit einer bei Applikationstemperatur fließfähigen und Wert- und/oder Hilfsstoffe des angegebenen Einsatzgebietes enthaltenden Zubereitung der Auftragsmasse beaufschlagt und vorzugsweise durchdringend imprägniert worden ist.

15. Kornförmiges Gut nach Anspruch 14, dadurch gekennzeichnet, daß als Auftragsmasse der 2. Stufe wenigstens anteilig Wertstoffe mit Tensidcharakter, insbesondere Niotenside und/oder Aniontenside, lösungsvermittelnde Hilfsstoffe insbesondere für eine beschleunigte Auflösung beziehungsweise Emulgierung der Trägerbeads in wäßrigen Phasen und/oder temperaturempfindliche Hilfsstoffe aus dem Gebiet der Netz- Wasch- und/oder Reinigungsmittel vorliegen.

16. Kornförmiges Gut nach Anspruch 14, dadurch gekennzeichnet, daß die Auftragsmasse der 2. Stufe als solche bei Raumtemperatur oder wenigstens bei Auftragstemperatur auf das Trägerbead eine flüssige Phase darstellt und/oder unter Einsatz einer Hilfsflüssigkeit, insbesondere Wasser, zur Lösung, Emulsion, feinteiligen Dispersion oder Suspension, umgewandelt werden kann.

17. Kornförmiges Gut nach Anspruch 14, dadurch gekennzeichnet, daß die Auftragsmasse der 2. Stufe in Mengen (Gew.-% bezogen auf Trägerbead Trockengewicht) von wenigstens etwa 1 Gew.-% bis zur maximalen Befüllbarkeit des Trägerbeads vorliegt, wobei Mengen im Bereich von etwa 3 bis 80 Gew.-%, zweckmäßig von etwa 5 bis 50 Gew.-% und insbesondere von etwa 10 bis 35 Gew.-% Auftragsmasse bevorzugt sein können, (Gew.-% hier bezogen auf Gewicht des unbeladenen Trägerbeads).

18. Kornförmiges Gut nach Anspruch 1, dadurch gekennzeichnet, daß zusätzliche Anteile der Auftragsmasse auch auf der Außenfläche der Trägerbeads vorliegen können, die gleich und/oder verschieden zu der in die porige Grundstruktur des Trägerbeads eingetragenen Auftragsmasse sind.

19. Kornförmiges Gut nach Anspruch 1, dadurch gekennzeichnet, daß - insbesondere zusammen mit einem aniontensidhaltigen Trägerbead - als Auftragsmasse Niotenside vorliegen, die bevorzugt den Klassen der organophile Reste aufweisenden Polyglycolether, entsprechender Polyglycolester, Mischether und/oder Mischester, den Alkyloligoglykosid-Verbindungen, Zucker- und/oder Eiweiß-Tensiden und/oder den Nio-Spezialtensiden zugehören.

20. Kornförmiges Gut nach Anspruch 1, dadurch gekennzeichnet, daß es als lagerstabil schüttund rieselfähige Masse ausgebildet ist, die erforderlichenfalls nach dem Gutauftrag der 2. Stufe nochmals getrocknet worden ist, wobei der Gehalt an nicht gebundenem Restwasser bevorzugt unter 10 Gew.-%, insbesondere nicht über 5 Gew.-% bezogen auf beladenes Trägerbead - liegt.

21. Kornförmiges Gut nach Anspruch 1, dadurch gekennzeichnet, daß es als Aniontensidkomponenten im Trägerbead ABS, FAS, FAES, MES und/oder Di-Salze, enthält, wobei beim Vorliegen von ABS, FAS, FAES und/oder MES als Hauptbestandteil des Träger-Beads die Mitverwendung beschränkter Mengen an temperaturstabilen, im Trockenzustand nicht-klebrigen löslichen und/oder feinteilig unlöslichen Komponenten organischer und/oder anorganischer Natur bevorzugt ist.

22. Kornförmiges Gut nach Anspruch 1, dadurch gekennzeichnet, daß Di-Salze als Aniontensid und/oder als temperaturstabile Zusatzkomponente als Bestandteil des Trägerbeads vorliegen.

23. Poröses Trägerbead für die Herstellung von festen Netz-, Wasch- und/oder Reinigungsmitteln mit verbesserter Wasserlöslichkeit, das insbesondere als Träger für die Aufhahme von Wert- und/oder Hilfsstoffen des angenannten Anwendungsgebietes geeignet ist und durch Heißgastrocknung einer fließfähigen, insbesondere wäßrigen Zubereitung des Trägerbead-Materials gewonnen wird, dadurch gekennzeichnet, daß es eine saugfähig poröse Innenstruktur aufweist, durch Sprüh- und/oder Wirbelschichttrocknung in überhitztem Wasserdampf hergestellt worden ist, und im Temperaturbereich von 100 bis 110 °C, bevorzugt im Temperaturbereich bis 120 °C, als Feststoff vorliegt, dessen Plastizität und Oberflächenklebrigkeit derart eingeschränkt sind, daß substantielle Verklebungen der Teilchen miteinander und/oder deren offenporigen Innenstruktur auch unter den Bedingungen der Einwirkung des überhitzten Wasserdampfs ausscheiden.

24. Poröses Trägerbead nach Anspruch 23, dadurch gekennzeichnet, daß es unter Mitverwendung von Wertstoffen mit Tensidcharakter, insbesondere unter Mitverwendung von Aniontensiden, hergestellt worden ist.

25. Poröses Trägerbead nach Anspruch 23, dadurch gekennzeichnet, daß es zu wenigstens etwa 15 Gew.-%, vorzugsweisen zu mehr als 25 Gew.-% und insbesondere zu wenigstens 50 Gew.-% bezogen auf poröses Trägerbead - aus Aniontensiden besteht.

26. Poröses Trägerbead nach Anspruch 23, dadurch gekennzeichnet, daß es Aniontensiden aus den Klassen der wasch- und reinigungsaktiven Carboxylate, entsprechender Sulfonate einschließlich der Estersulfonate, der Di-Salze und bevorzugt aus der Klasse der wasch- und reinigungsaktiven Sulfate enthält.

27. Poröses Trägerbead nach Anspruch 23, dadurch gekennzeichnet, daß es die Aniontenside in Abmischung mit wasserlöslichen und/oder feinteiligen wasserunlöslichen anorganischen und/oder organischen Hilfs- und/oder Wertstoffen enthält, die bevorzugt im Trockenzustand fest und nichtklebrig sind, wobei Aniontenside oder Aniontensidmischungen bevorzugt sein können, die wenigstens anteilsweise im Temperaturbereich von 100 bis 110 °C fest sind.

28. Poröses Trägerbead nach Anspruch 23, dadurch gekennzeichnet, daß es unter Mitverwendung von organischen und/oder anorganischen nicht-tensidischen Hilfs- und/oder Wertstoffen des angegebenen Einsatzgebietes aufgebaut ist, dabei in aufgetrockneter Form im Temperaturbereich von 100 bis 110 °C als Feststoff vorliegt und bevorzugt nicht-klebrige Beschaffenheit aufweist.

29. Poröses Trägerbead nach Anspruch 23, dadurch gekennzeichnet, daß es aus Gemischen von Tensiden, insbesondere Aniontensiden, und wasserlöslichen und/oder feinteiligen wasserunlöslichen anorganischen Wertstoffen ohne Tensidcharakter aufgebaut ist, wobei als anorganische Mischungskomponenten insbesondere Alkalisierungsmittel wie lösliche Alkalisilikate (Wasserglas), Soda und/oder Alkalhydroxid, Builder- und/oder Co-Builderkomponenten wie Phosphate, feinteilige unlösliche Silikate, insbesondere Zeolith-Verbindungen wie Zeolith- NaA in Waschmittelqualität, oder Bentonite und/oder Kristallwasser-bindende Salze, wie Natriumsulfat, vorliegen.

30. Poröses Trägerbead nach Anspruch 23, dadurch gekennzeichnet, daß es in seiner Korngrundstruktur die Aniontenside in Abmischung mit hinreichend temperaturstabilen sonstigen Wertstoffen der Netz-, Wasch- und/oder Reinigungsmittel, insbesondere aus den Klassen der Niotenside, der organischen Builder/Co-Builder, der Vergrauungs- und Verfarbungshinhibitoren, der Schaumregulatoren und/oder der optischen Aufheller, enthält, wobei Abmischungen der Aniontenside mit Hilfsstoffen zur Verbesserung der Aniontensidauflösung in wäßrigen Phasen wie Dispergatoren, Hydrotrope, Strukturbrecher und/oder sonstigen Lösungsvermittler bevorzugt sein können.

31. Poröses Trägerbead nach Anspruch 23, dadurch gekennzeichnet, daß es als Aniontensidkomponenten ABS, FAS, FAES, MES und/oder Di-Salze enthält, wobei beim Vorliegen von ABS, FAS, FAES und/oder MES als Hauptbestandteil des Trägerbeads die Mitverwendung beschränkter Mengen an temperaturstabilen löslichen und/oder feinteilig unlöslichen Komponenten organischer und/oder anorganischer Natur bevorzugt ist.

32. Poröses Trägerbead nach Anspruch 23, dadurch gekennzeichnet, daß Di-Salze als Aniontensid und/oder als temperaturstabile Zusatzkomponente im Trägerbead vorliegen.

33. Verwendung der porösen Trägerbeads nach Anspruch 23 und/oder des kornförmigen Gutes nach Anspruch 1 als Bestandteil von Netz-, Wasch- und/oder Reinigungsmitteln in fester Anbietungsform.

34. Verfahren zur Herstellung des kornförmigen Gutes nach Anspruch 1, bei dem man wäßrige Zubereitungen der das Trägerbead bildenden Materialien der Trocknung in überhitztem Wasserdampf, insbesondere einer entsprechenden Sprühtrocknung und/oder Trocknung in der Wirbelschicht unterwirft und das gebildete Trägerbead mit einer fließfähgen Zubereitung von Wertstoffen des Gebietes der Netz-, Wasch- und/oder Reinigungsmittel beaufschlagt, dabei bevorzugt durchdringend imprägniert und erforderlichenfalls das imprägnierte Gut einer Nachtrocknung unterwirft.

35. Verfahren nach Anspruch 34, dadurch gekennzeichnet, daß der Gutauftrag auf das vorgebildete Trägerbead bei Temperaturen von höchstens etwa 100 °C vorzugsweise im Bereich von Raumtemperatur bis 75 °C durchgeführt wird.

36. Verfahren nach Anspruch 34, dadurch gekennzeichnet, daß die zur Imprägnierung eingesetzte fließfähige Wertstoffzubereitung und/oder das Trägerbead auf angehobene Temperaturen im Arbeitsbereich vorgewärmt werden.

37. Verfahren nach Anspruch 34, dadurch gekennzeichnet, daß der Gutauftrag auf das vorgebildete Trägerbead mehrstufig erfolgt, wobei in den einzelnen Auftragsstufen gleiche und/oder unterschiedliche Materialien eingesetzt werden können.

## Claims

1. Useful materials and mixtures thereof for use in wetting agents, detergents and/or cleaning products in the form of free-flowing granules which are obtained by impregnating basic granules (carrier beads) which, in their non-impregnated state, have a porous basic structure with a preparation containing useful materials of the type mentioned above (coating composition), characterized in that the carrier beads are a material which has been obtained by spray-drying and/or fluidized-bed drying in superheated steam and which is present in solid form at temperatures in the range from 100 to 110°C, the plasticity and surface tackiness of the solid material being limited to such an extent that there is no significant adhesion of the particles to one another and/or within their open-pored inner structure, even under the conditions of exposure to the superheated steam.

2. A granular material as claimed in claim 1, characterized in that the carrier beads are formed at least partly and preferably at least predominantly of useful materials for wetting agents, detergents and/or cleaning products and have been produced by drying of a free-flowing, more particularly aqueous, preparation in superheated steam.

3. A granular material as claimed in claim 1, characterized in that the dried carrier beads have the limited plasticity and surface tackiness at temperatures of up to about 120°C.

4. A granular material as claimed in claim 1, characterized in that at least a substantial part of the coating composition is introduced into the porous inner structure of the carrier beads and preferably impregnates at least 10% by volume and, more preferably at least 50% by volume of the inner structure, based on the accessible inner volume of the carrier beads.

5. A granular material as claimed in claim 1, characterized in that the accessible inner volume of the carrier beads is almost completely filled with coating composition and, in addition, only limited quantities of coating composition are present on the outer surfaces of the carrier beads, preferably corresponding at most to the inner filling and, more preferably, amounting to less than the inner filling.

6. A granular material as claimed in claim 1, characterized in that no significant amounts of the coating composition are present in the outer region of the granules, particularly in cases where the coating composition is free-flowing and/or tacky at room temperature.

7. A granular material as claimed in claim 1, characterized in that the carrier beads are formed using surface-active useful materials which preferably make up at least about 10% by weight and, more preferably, at least about 35% by weight of the carrier beads or may even make up at least about 50% of the weight of the carrier beads.

8. A granular material as claimed in claim 1, characterized in that the carrier beads contain anionic surfactants, optionally in admixture with water-soluble and/or fine-particle water-insoluble inorganic and/or organic auxiliaries and/or useful materials, anionic surfactants or anionic surfactant mixtures which are at least partly solid at temperatures in the range from about 100 to 110°C being preferred.

9. A granular material as claimed in claim 1, characterized in that the carrier beads contain in admixture with the surface-active compounds auxiliaries and/or useful materials which contribute towards the necessary reduction in the surface tackiness and plasticity of the multicomponent mixture.

10. A granular material as claimed in claim 1, characterized in that, in their basic structure, the carrier beads contain anionic surfactants from the classes of carboxylates, sulfonates, including ester sulfonates, disalts and/or preferably anionic surfactants from the class of washing- and/or cleaning-active sulfates.

11. A granular material as claimed in claim 1, characterized in that the carrier beads are made up of mixtures of one or more surfactants, particularly anionic surfactants, and water-soluble and/or fine-particle water-insoluble inorganic and/or organic non-surface-active useful materials, the inorganic mixture components present being in particular alkalizing agents, such as soluble alkali metal silicates (waterglass), soda and/or alkali metal hydroxide, builder and/or co-builder components, such as phosphates, fine-particle insoluble silicates, more particularly zeolite compounds, such as detergent-quality zeolite NaA, or bentonites and/or salts capable of binding water of crystallization, such as sodium sulfate.

12. A granular material as claimed in claim 1, characterized in that the carrier beads contain the inorganic and/or organic auxiliaries in their basic structure in quantities of not more than about 60% by weight, preferably in quantities of 5 to 50% by weight and, more preferably, in quantities of 10 to 30% by weight, based on the non-impregnated dried carrier beads.

13. A granular material as claimed in claim 1, characterized in that, in their basic structure, the carrier beads contain the anionic surfactants in admixture with other sufficiently thermally stable useful materials from the field of wetting agents, detergents and/or cleaning products, more particularly from the classes of nonionic surfactants, organic builders/co-builders, redeposition and discoloration inhibitors, foam regulators and/or optical brighteners, mixtures of the anionic surfactants with auxiliaries for improving the dissolution of the anionic surfactants in aqueous phases, such as dispersants, hydrotropes, structure breakers and/or other solubilizers, being preferred.

14. A granular material as claimed in claim 1, characterized in that, in at least one subsequent step (second step), the carrier beads dried to form a pourable material are coated and, preferably, impregnated throughout with a preparation of the coating composition containing useful materials and/or auxiliaries from the field of application in question which are liquid at the application temperature.

15. A granular material as claimed in claim 14, characterized in that surface-active useful materials, more particularly nonionic surfactants and/or anionic surfactants, solubilizing auxiliaries, more particularly for the accelerated dissolution or emulsification of the carrier beads in aqueous phases, and/or temperature-sensitive auxiliaries from the field of wetting agents, detergents and/or cleaning products are at least partly present as the coating composition of the second step.

16. A granular material as claimed in claim 14, characterized in that the coating composition of the second step as such is a liquid phase at room temperature or at least at the temperature at which it is applied to the carrier beads and/or may be converted into a solution, emulsion, fine-particle dispersion or suspension using an auxiliary liquid, more particularly water.

17. A granular material as claimed in claim 14, characterized in that the coating composition of the second step is present in quantities (% by weight, based on the dry weight of the carrier beads) of at least about 1% by weight to the maximum absorption capacity of the carrier beads, quantities of from about 3 to 80% by weight, preferably from about 5 to 50% by weight and, more preferably, from about 10 to 35% by weight (based on the weight of the non-impregnated carrier beads) of the coating composition being preferred.

18. A granular material as claimed in claim 1, characterized in that additional quantities of the coating composition, which are the same as and/or different from the coating composition introduced into the porous basic structure of the carrier beads, may also be present on the outer surface of the carrier beads.

19. A granular material as claimed in claim 1, characterized in that nonionic surfactants preferably belonging to the classes of polyglycol ethers containing organophilic residues, corresponding polyglycol esters, mixed ethers and/or mixed esters, alkyl oligoglycoside compounds, sugar and/or protein surfactants and/or special nonionic surfactants are present as the coating composition, particularly in conjunction with carrier beads containing anionic surfactants.

20. A granular material as claimed in claim 1, characterized in that it is in the form of storable, pourable and free-flowing granules which, if necessary, have been redried after coating in the second step, the content of unbound residual water preferably being less than 10% by weight and, more preferably, not exceeding 5% by weight, based on impregnated carrier beads.

21. A granular material as claimed in claim 1, characterized in that it contains ABS, FAS, FAES, MES and/or disalts as anionic surfactant components in the carrier beads, the presence of limited quantities of thermally stable, soluble and/or insoluble fine-particle components of organic and/or inorganic character which are non-tacky in their dry state being preferred where ABS, FAS, FAES and/or MES is/are present as the principle constituent of the carrier beads.

22. A granular material as claimed in claim 1, characterized in that disalts are present as the anionic surfactant and/or as a thermally stable additional component of the carrier beads.

23. Porous carrier beads for the production of solid wetting agents, detergents and/or cleaning products having an improved solubility in water, which are particularly suitable as carriers for absorbing useful materials and/or auxiliaries from the field mentioned above and which are obtained by drying a free-flowing, more particularly aqueous, preparation of the carrier bead material with hot gas, characterized in that it has an absorbent porous inner structure, has been produced by spray drying and/or fluidized bed drying in superheated steam and are present in solid form at temperatures in the range from 100 to 110°C and preferably at temperatures of up to 120°C, their plasticity and surface tackiness being limited to such an extent that there is no significant adhesion of the particles to one another and/or within their open-pored inner structure, even under the conditions of exposure to the superheated steam.

24. Porous carrier beads as claimed in claim 23, characterized in that they have been produced using surface-active useful materials, more particularly anionic surfactants.

25. Porous carrier beads as claimed in claim 23, characterized in that at least about 15% by weight, preferably more than 25% by weight and, in particular, at least 50% by weight of the porous carrier beads consist of anionic surfactants.

26. Porous carrier beads as claimed in claim 23, characterized in that they contain anionic surfactants from the classes of washing- and cleaning-active carboxylates, corresponding sulfonates, including ester sulfonates, disalts and preferably from the class of washing- and cleaning-active sulfates.

27. Porous carrier beads as claimed in claim 23, characterized in that they contain the anionic surfactants in admixture with water-soluble and/or fine-particle water-insoluble inorganic and/or organic auxiliaries and/or useful materials which are preferably solid and non-tacky in their dry state, anionic surfactants or mixtures of anionic surfactants which are at least partly solid at temperatures in the range from 100 to 110°C being preferred.

28. Porous carrier beads as claimed in claim 23, characterized in that they are made up using organic and/or inorganic non-surface-active auxiliaries and/or useful materials from the field of application in question, are present in solid form at temperatures of from 100 to 110°C after drying and are preferably non-tacky.

29. Porous carrier beads as claimed in claim 23, characterized in that they are made up of mixtures of surfactants, more particularly anionic surfactants, and water-soluble and/or fine-particle water-insoluble, inorganic non-surface-active useful materials, the inorganic mixture components present being in particular alkalizing agents, such as soluble alkali metal silicates (waterglass), soda and/or alkali metal hydroxide, builder and/or co-builder components, such as phosphates, fine-particle insoluble silicates, more particularly zeolite compounds, such as detergent-quality zeolite NaA, or bentonites and/or salts capable of binding water of crystallization, such as sodium sulfate.

30. Porous carrier beads as claimed in claim 23, characterized in that, in their basic structure, they contain the anionic surfactants in admixture with other sufficiently thermally stable useful materials from the field of wetting agents, detergents and/or cleaning products, more particularly from the classes of nonionic surfactants, organic builders/co-builders, redeposition and discoloration inhibitors, foam regulators and/or optical brighteners, mixtures of the anionic surfactants with auxiliaries for improving the dissolution of the anionic surfactants in aqueous phases, such as dispersants, hydrotropes, structure breakers and/or other solubilizers, being preferred.

31. Porous carrier beads as claimed in claim 23, characterized in that they contain as anionic surfactant components ABS, FAS, FAES, MES and/or disalts as anionic surfactant components in the carrier beads, the presence of limited quantities of thermally stable, soluble and/or insoluble fine-particle components of organic and/or inorganic character which are non-tacky in their dry state being preferred where ABS, FAS, FAES and/or MES is/are present as the principal constituent of the carrier beads.

32. Porous carrier beads as claimed in claim 23, characterized in that disalts are present as the anionic surfactant and/or as a thermally stable additional component of the carrier beads.

33. The use of the porous carrier beads claimed in claim 23 and/or the granular material claimed in claim 1 as a constituent of solid wetting agents, detergents and/or cleaning products.

34. A process for the production of the granular material claimed in claim 1, in which aqueous preparations of the materials forming the carrier beads are subjected to drying in superheated steam, more particularly to corresponding spray drying and/or fluidized bed drying, and the carrier beads formed are coated and preferably impregnated throughout with a free-flowing preparation of useful materials from the field of wetting agents, detergents and/or cleaning products and, if necessary, the impregnated material is subsequently dried.

35. A process as claimed in claim 34, characterized in that the coating composition is applied to the preformed carrier beads at temperatures of at most about 100°C and preferably at temperatures in the range from room temperature to 75°C.

36. A process as claimed in claim 34, characterized in that the free-flowing useful material preparation used for impregnation and/or the carrier beads are preheated to raised temperatures in the working range.

37. A process as claimed in claim 34, characterized in that the coating composition is applied to the preformed carrier beads in several stages, the same materials and/or different materials being used in the individual stages.

## Revendications

1. Produits d'intérêt ou substances de valeurs appropriées pour l'utilisation dans des produits de mouillage, de lavage et/ou de nettoyage, et des mélanges de substances de valeur sous forme d'un produit granuleux apte à l'écoulement qui est produit par chargement d'un grain de base qui possède à l'état non chargé une structure de base poreuse (perles support) avec une préparation qui contient des substances de valeur du type mentionné (masse d'application),
caractérisées en ce que
les perles support sont un matériau produit par séchage par pulvérisation et/ou en lit fluidifié à la vapeur d'eau surchauffée qui se présente sous forme de matière solide dans la zone de température allant de 100 à 110°C, dont la plasticité et l'adhésivité des surfaces sont limitées de sorte que des collages essentiels des particules les unes avec les autres et/ou des collages de leur structure interne à pores ouverts se séparent aussi dans les conditions de l'action de la vapeur d'eau surchauffée.

2. Produit granuleux selon la revendication 1,
caractérisé en ce que
les perles support sont formées au moins partiellement, de préférence au moins de façon prépondérante de substances de valeur pour produits mouillants, de lavage et/ou de nettoyage et ont été produits par séchage de préparations aptes à l'écoulement, en particulier aqueuses dans la vapeur d'eau surchauffée.

3. Produit granuleux selon la revendication 1,
caractérisé en ce que
les perles support séchées possèdent la plasticité et l'adhésivité de surface limitée dans une zone de température allant jusqu'à environ 120°C.

4. Produit granuleux selon la revendication 1,
caractérisé en ce que
la masse d'application est introduite pour une quantité au moins substantielle dans la structure poreuse interne des perles de support et que cette structure interne occupe de préférence pour au moins 10 % en volume, d'une manière appropriée pour au moins 50 % en volume, rapporté au volume interne accessible des perles de support.

5. Produit granuleux selon la revendication 1,
caractérisé en ce que
le volume interne disponible des perles de support est rempli pratiquement complètement avec la masse d'application et en outre des quantités seulement limitées de masse d'application sont présentes sur les surfaces externes des perles de support qui correspondent de préférence au plus à environ le remplissage interne en particulier cependant se trouvent insérées.

6. Produit granuleux selon la revendication 1,
caractérisé en ce qu'
en particulier dans des masses d'application aptes à l'écoulement et/ou collantes dans la zone de température ambiante, aucune quantité substantielle de la masse d'application n'est présente dans la zone extérieure du grain.

7. Produit granuleux selon la revendication 1,
caractérisé en ce que
les perles de support sont constituées avec utilisation conjointe de substances de valeur ayant un caractère tensioactif, qui représentent de préférence au moins environ 10 % en poids, en particulier au moins environ 35 % en poids des perles de support, également environ 50 % en poids, rapporté au poids de perles de support.

8. Produit granuleux selon la revendication 1,
caractérisé en ce que
les perles de support renferment des agents tensioactifs, anioniques, le cas échéant en mélange avec des substances auxiliaires et/ou des substances de valeur solubles dans l'eau, et/ou insolubles dans l'eau finement divisées, minérales et/ou organiques, pour lesquelles on peut préférer des agents tensioactifs anioniques ou des mélanges d'agents tensioactifs anioniques qui sont solides au moins partiellement dans la zone de température allant environ de 100 à 110°C.

9. Produit granuleux selon la revendication 1,
caractérisé en ce que
les perles de support renferment en mélange avec les composés tensioactifs des substances auxiliaires et/ou des substances de valeur qui contribuent à l'abaissement nécessaire de l'adhésivité des surfaces et à la plasticité du mélange multi-composants.

10. Produit granuleux selon la revendication 1,
caractérisé en ce que
les perles de support renferment dans leur structure de base des agents tensioactifs anioniques choisis dans les classes des carboxylates, des sulfonates y compris des esters de sulfonate, des di-sels et/ou de préférence des agents tensioactifs choisis dans la classe des sulfates actifs pour le lavage et/ou le nettoyage.

11. Produit granuleux selon la revendication 1,
caractérisé en ce que
les perles de support sont constituées de mélanges d'un ou plusieurs agents tensioactifs en particulier des agents tensioactifs anioniques et de substances de valeur sans caractère tensioactif, solubles dans l'eau et/ou insoluble dans l'eau finement divisées, minérales et/ou organiques dans lesquels comme composants de mélange minéraux, en particulier des produits d'alcalinisation comme des silicates de métal alcalin solubles (verre soluble), du carbonate de sodium et/ou un hydroxyde de métal alcalin, des composants d'agents de structuration et/ou de co-agents de structuration sont présents comme des phosphates, des silicates finement divisés insolubles, en particulier des composés de zéolite, comme la zéolite NaA à la qualité de produit de lavage ou des bentonites et/ou des sels qui se lient à l'eau de cristallisation comme le sulfate de sodium.

12. Produit granuleux selon la revendication 1,
caractérisé en ce que
les perles de support renferment dans leur structure de grains, les substances auxiliaires minérales et/ou organiques en quantités qui ne sont pas supérieurs à environ 60 % en poids, de préférence dans la zone de 5 à 50 % en poids, et en particulier en quantités allant de 10 a 30 % en poids, les % en poids étant rapportés aux perles de support séchées non chargées.

13. Produit granuleux selon la revendication 1,
caractérisé en ce que
les perles de support renferment dans leur structure de base de grains les agents tensioactifs en mélange avec des substances de valeur par ailleurs suffisamment stables à la température du domaine des produits mouillants, des produits de lavage et/ou des produits de nettoyage, en particulier ceux des classes des agents tensioactifs non ioniques des agents de structuration/co-agents de structuration organiques, des inhibiteurs de grisaillement et de coloration, des régulateurs de mousse, et/ou des azurants optiques, dans lesquels des mélanges d'agents tensioactifs anioniques avec les substances auxiliaires en vue de l'amélioration de la mise en solution de l'agent tensioactif, dans les phases aqueuses comme des agents dispersants, des substances hydrotropes, des agents qui provoquent la rupture de la structure et/ou d'autres agents dissolvants peuvent être préférés.

14. Produit granuleux selon la revendication 1,
caractérisé en ce que
les perles de support séchées pour le produit apte à l'écoulement ont été mises en contact dans au moins une étape de travail à la suite (2ème étape) avec une préparation de masse d'application renfermant des substances de valeur et/ou des substances auxiliaires aptes à l'écoulement à la température d'application du domaine d'utilisation indiqué et ont été imprégnées de préférence par pénétration.

15. Produit granuleux selon la revendication 14,
caractérisé en ce que
comme masse d'application de la deuxième étape au moins partiellement des substances de valeur, ayant un caractère tensioactif, en particulier sont présents des agents tensioactifs non ioniques et/ou des agents tensioactifs anioniques des substances auxiliaires qui servent d'aide à la dissolution, en particulier pour l'accélération de la mise en solution ou d'une mise en émulsion des perles de support dans des phases aqueuses et/ou des substances auxiliaires sensibles à la température provenant du domaine des produits mouillants, des produits de lavage et/ou des produits de nettoyage.

16. Produit granuleux selon la revendication 14,
caractérisé en ce que
la masse d'application de la deuxième étape représente comme telle à la température ambiante ou au moins à la température d'application sur les perles de support, une phase liquide et/ou peut être transformé en utilisant un liquide auxiliaire, en particulier l'eau, en solution, émulsion, dispersion ou suspension finement divisée.

17. Produit granuleux selon la revendication 14,
caractérisé en ce que
la masse d'application de la deuxième étage est présente en quantité (% en poids rapporté au poids sec de perles de support) d'au moins environ 1 % en poids jusqu'à la capacité maximale de remplissage des perles de support, pour lesquelles des quantités dans la zone environ de 3 à 80 % en poids, d'une manière appropriée environ de 5 à 50 % en poids et en particulier environ de 10 à 35 % en poids de masse d'application peuvent être préférées (% en poids ici rapportés au poids des perles de support non chargées).

18. Produit granuleux selon la revendication 1,
caractérisé en ce que
des quantités supplémentaires de masse d'application peuvent se présenter aussi sur les surfaces externes des perles de support qui sont identiques ou différentes des masses d'application introduites dans la structure de base poreuse des perles de support.

19. Produit granuleux selon la revendication 1,
caractérisé en ce qu'
en particulier conjointement aux perles de support qui renferment un agent tensioactif anionique, des agents tensioactifs non ioniques sont présents comme masse d'application, qui appartiennent de préférence aux classes des éthers de polyglycols possédant des radicaux organophiles, les esters de polyglycols correspondants, des éthers et/ou des esters mixtes, aux dérivés d'alkyloligoglycosides, aux agents tensioactifs dérivés de sucres et/ou d'albumine et/ou aux agents tensioactifs spéciaux non ioniques.

20. Produit granuleux selon la revendication 1,
caractérisé en ce qu'
il est réalisé sous forme d'une masse stable au stockage apte à l'écoulement et au ruissellement qui au cas où c'est nécessaire, après l'application de produit de la deuxième étape, a été séchée encore une fois dans lequel la teneur en eau résiduelle non liée se situe de préférence en dessous de 10 % en poids, en particulier pas au-dessus de 5 % en poids rapporté aux perles de support chargées.

21. Produit granuleux selon la revendication 1,
caractérisé en ce qu'
il renferme comme composants tensioactifs anioniques dans les perles de support, ABS, FAS, FAES, MES et/ou leurs di-sels, pour lesquels dans le cas de présence de ABS, FAS, FAES et/ou MES comme constituant principal des perles de support, on préfère l'utilisation conjointe de quantités limitées de composants de nature organique et/ou minérale stables à la température, non collants à l'état sec, solubles et/ou insolubles finement divisés.

22. Produit granuleux selon la revendication 1,
caractérisé en ce que
des di-sels sont présents comme agent tensioactif anionique et/ou comme composant d'addition stable à la température en tant que constituant des perles de support.

23. Perle de support poreuse pour la fabrication de produits mouillants, de produits de lavage et/ou de nettoyage solides ayant une solubilité améliorée dans l'eau, qui conviennent en particulier comme support pour recevoir des substances de valeur et/ou auxiliaires du domaine d'application mentionné, et qui sont produits par séchage à la vapeur surchauffée d'un matériau de perles de support apte à l'écoulement, en particulier d'une préparation aqueuse,
caractérisé en ce qu'
elle possède une structure interne poreuse absorbante par séchage par pulvérisation et/ou en lit fluidifié dans de la vapeur d'eau surchauffée et se présente dans la zone de température allant de 100 à 110°C, de préférence dans la zone de température allant jusqu'à 120°C, sous forme de matière solide, dont la plasticité et l'adhésivité de la surface sont restreintes de façon que des collages substantiels des particules les unes avec les autres et/ou dont la structure interne à pores ouverts se sépare aussi dans les conditions de l'action de la vapeur d'eau surchauffée.

24. Perle de support poreuse selon la revendication 23,
caractérisée en ce qu'
elle a été produite en utilisant conjointement des substances de valeur ayant un caractère tensioactif, en particulier en utilisant conjointement des agents tensioactifs anioniques.

25. Perlede support poreuse selon la revendication 23,
caractérisée en ce que
pour au moins environ 15 % en poids, de préférence pour plus de 25 % en poids et en particulier pour au moins 50 % en poids, rapporté à la perle de support poreuse, elle consiste en des agents tensioactifs anioniques.

26. Perle de support poreuse selon la revendication 23,
caractérisée en ce qu'
elle renferme des agents tensioactifs anioniques choisis dans les classes des carboxylates actifs pour le nettoyage et le lavage, des sulfonates correspondants y compris des esters de sulfonate, des di-sels et de préférence dans la classe des sulfates actifs pour le lavage et le nettoyage.

27. Perle de support poreuse selon la revendication 23,
caractérisée en ce qu'
elle renferme les agents tensioactifs anioniques en mélange avec des substances auxiliaires et/ou des substances de valeurs minérales et/ou organiques solubles dans l'eau et/ou insolubles dans l'eau finement divisées qui de préférence sont solides à l'état sec et non collants pour lesquels les agents tensioacrifs anioniques ou les mélanges d'agents tensioactifs anioniques peuvent être préférés qui sont solides au moins partiellement dans la zone de température allant de 100 à 110°C.

28. Perle de support poreuss selon la revendication 23,
caractérisée en ce qu'
elle est construite en utilisant conjointement des substances auxiliaires et/ou des substances de valeur non tensioactives organiques et/ou minérales, du domaine d'utilisation indiqué, de cette manière sous forme séchée dans la zone de température de 100 à 110°C, elle se présente sous forme de solide et possède de préférence une structure non adhésive.

29. Perle de support poreuse selon la revendication 23,
caractérisée en ce qu'
elle est constituée de mélanges d'agents tensioactifs, en particulier d'agents tensioactifs anioniques, et de substances de valeur sans caractère tensioactif solubles dans l'eau et/ou insolubles dans l'eau finement divisées, minérales dans lesquels comme composants de mélange minéraux, en particulier des agents d'alcalinisation comme des silicates de métal alcalin soluble (verre soluble), du carbonate de sodium et/ou un hydroxyde de métal alcalin, des composants d'agents de structuration et/ou de co-structuration comme des phosphates, des silicates insolubles finement divisés, en particulier des composés de zéolite comme en composé de zéolite NaA comme qualité des produits de lavage, ou des bentonites et/ou des sels qui se lient à l'eau de cristallisation comme le sulfate de sodium.

30. Perle de support poreuse selon la revendication 23,
caractérisée en ce qu'
elle renferme dans leur structure de base de grain, les agents tensioactifs anioniques en mélange avec des substances de valeur suffisamment stables à la température de produits mouillants, de produits de lavage et de nettoyage, en particulier choisis dans les classes des agents tensioactifs non ioniques, des agents de structuration et des co-agents de structuration organiques, des inhibiteurs de grisaillement et de coloration, des régulateurs de mousse et/ou des azurants optiques, pour lesquels peuvent être préférés les mélanges des agents tensioactifs anioniques avec des substances auxiliaires pour l'amélioration de la mise en solution des agents tensioactifs dans les phases aqueuses comme les agents dispersants, les substances hydrotropes, les agents qui rompent la structure, et/ou les autres agents dissolvants.

31. Perle de support poreuse selon la revendication 23,
caractérisée en ce qu'
elle renferme comme composants tensioactifs anioniques, ABS, FAS, FAES, MES et/ou des di-sels pour lesquels en cas de présence de présence de ABS, FAS, FAES et/ou de MES comme constituant principal des perles de support, on préfère l'utilisation conjointe de quantités limitées de composants stables à la température, solubles et/ou insolubles finement divisés, de nature organique et/ou minérale.

32. Perle de support poreuse selon la revendication 23,
caractérisée en ce que
les di-sels sont présents en tant qu'agent tensioactif anionique et/ou comme composant d'addition stable à la température dans les perles de support.

33. Utilisation des perles de support poreuses selon la revendication 23 et/ou du produit granuleux selon la revendication 1 comme composant de produit mouillant, de produit de lavage et/ou de nettoyage sous forme d'utilisation solide.

34. Procédé de fabrication du produit granuleux selon la revendication 1, dans lequel on soumet des préparations aqueuses des matériaux qui forment les perles de support, à un séchage à la vapeur d'eau surchauffée, en particulier à un séchage par pulvérisation correspondant et/ou à un séchage en lit fluidifié dans lequel les perles de support formées sont mises en contact avec une préparation apte à l'écoulement de substances de valeur du domaine des produits de mouillage, des produits de lavage et/ou de nettoyage, pour cela on imprègne de préférence par perméation et au cas où c'est nécessaire on soumet le produit imprégné à un reséchage.

35. Procédé selon la revendication 34,
caractérisé en ce que
l'application de produit sur les perles de support préformées est effectuée à des températures d'au maximum environ 100°C, de préférence dans la zone allant de la température ambiante à 75°C.

36. Procédé selon la revendication 34,
caractérisé en ce que
la préparation de substance de valeur apte à l'écoulement utilisée pour l'imprégnation et/ou les perles de support sont préchauffées à des températures relevées dans la zone de travail.

37. Procédé selon la revendication 34,
caractérisé en ce que
l'application de produit sur les perles de support préformées s'effectue dans laquelle on peut mettre en oeuvre dans les étapes séparées d'application des matériaux identiques et/ou différents.
